# EUROPÄISCHE PATENTSCHRIFT

(11) **EP 0 900 953 B1**
(45) Veröffentlichungstag und Bekanntmachung des Hinweises auf die Patenterteilung: **29.10.2003**
(21) Anmeldenummer: 98116855.2
(22) Anmeldetag: 07.09.1998
(51) Int. Cl.: F16H 25/24

(54) **Spindeltrieb mit Abstreiferbaugruppe**
Screw and nut drive with scraping device
Transmission vis-écrou avec un dispositif racleur

(30) Priorität: 08.09.1997 DE 19739216
(43) Veröffentlichungstag der Anmeldung: 10.03.1999
(73) Patentinhaber: Deutsche Star GmbH, 97424 Schweinfurt (DE)
(72) Erfinder: Greubel, Roland, Dipl.-Ing., 97729 Ramsthal (DE); Kunkel, Joachim, Dipl.-Ing., 97833 Habichsthal (DE)
(74) Vertreter: Herzog, Markus, Dipl.-Phys. Dr.

(56) Entgegenhaltungen:
- DD-A- 252 994
- DE-A- 2 540 942
- DE-A- 3 641 682
- DE-A- 3 902 273
- DE-U- 7 137 781
- US-A- 2 548 848
- US-A- 2 818 745
- US-A- 2 982 145

## Beschreibung

Die Erfindung betrifft einen Spindeltrieb gemäß dem Oberbegriff des Anspruch 1.

Ein solcher Spindeltrieb ist aus der US-A-2818745 bekannt. Bei dieser bekannten Ausführung ist der Adapter von einer einfachen Zylinderhülse gebildet. Der zylinderhülsenartige Adapter umgibt mit 'einem seiner Längsenden einen Endbereich der Mutter und ist an diesem mittels in radialer Richtung durch den zylinderhülsenartigen Adapter hindurch eingedrehten Madenschrauben festgelegt. Über den Umfang ist eine Mehrzahl von Madenschrauben vorgesehen, um eine Zentrierung des Adapters bezüglich der Mutter erreichen zu können.

Nachteilig an dieser Lösung ist, dass der die Spindel umgehende Adapter nur mit Mühe in radialer Richtung durch die mehreren in Umfangsrichtung vorhandenen in radialer Richtung eingedrehten Madenschrauben fixiert werden kann. Zum einen liegt eine Krafteinleitung einer Fixierungskraft nur an den Auflagepunkten der Madenschraube an der Außenseite der Mutter vor. Zum anderen führt ein Eindrehen der Madenschraube nach Anlage an der Außenfläche.der Mutter sehr leicht zu einer ungleichmäßigen Verformung an dem Durchgangsloch für die Madenschraube. Dies erschwert eine sichere und positionsgenaue Anbringung des Adapters. Darüber hinaus ist die Anbringung des Adapters an der Mutter durch die zahlreichen Schraubvorgänge an den Madenschrauben umständlich und zeitaufwendig.

Ein weiterer Spindeltrieb ist aus der DE 28 22 560 A1 bekannt. Bei der bekannten Lösung umfaßt die Abstreiferbaugruppe einen am Innenumfang einer Hülse angebrachten Dichtungsring, der am Gewinderücken eines Außengewindes der Spindel dichtend anliegt. Der Dichtungsring ist mit der Hülse unlösbar vernietet. Die aus dem Dichtungsring und der Hülse bestehende Abstreiferbaugruppe ist bei auf der Spindel montierter Mutter an dieser befestigbar. Hierzu ist an die Mutter ein axial abstehender Rohransatz angeschweißt. Auf diesen Rohransatz wird die den Dichtungsring tragende Hülse der Abstreiferbaugruppe aufgeschoben. Sodann wird die Abstreiferbaugruppe in axialer Richtung gegenüber dem Rohransatz manuell ausgerichtet, bis der Dichtungsring auf dem Gewinderücken des Außengewindes der Spindel optimal positioniert ist. Nach erfolgter Ausrichtung wird die Abstreiferbaugruppe durch Stifte und eine Klemmschelle axial und in Umfangsrichtung an dem Rohransatz fixiert.

Die bekannte Lösung erfordert Anpassungsarbeiten an der Mutter, um die Abstreiferbaugruppe montieren zu können. Es muß die Mutter einem Schweißvorgang unterworfen werden, um den Rohransatz an ihr zu befestigen. Soll eine als Serienbauteil erhältliche, herkömmliche Mutter verwendet werden, so ist es häufig überhaupt nicht möglich, von außen her einen Rohransatz an diese anzuschweißen. Häufig läßt das Material der Mutter oder/und mit ihr verbundener Komponenten das Anschweißen eines Rohransatzes gar nicht zu, etwa aufgrund hoher Wärmeempfindlichkeit, starker Verformungsgefahr oder schlechter Schweißeigenschaften. Dies gilt speziell für Präzisionsspindeltriebe, wie sie beispielsweise in Werkzeugmaschinen oder Meßeinrichtungen eingesetzt werden. Das Schweißen stellt zudem einen vergleichsweise aufwendigen und schwierigen Vorgang dar, da der Rohransatz in radialer Richtung exakt positioniert werden muß, um über den gesamten Umfang gleichmäßige Anlageverhältnisse des Dichtungsrings am Gewinderücken des Spindelgewindes sicherzustellen. Auch ist an herkömmlichen Muttern häufig aus konstruktiven oder Platzgründen keine geeignete Stelle zum Anschweißen eines Rohransatzes zu finden. Schließlich ist der Rohransatz nach dem Anschweißen nicht mehr von der Mutter abnehmbar, so daß die Mutter auf einen bestimmten Einsatzzweck festgelegt ist und nicht mehr für andere Einsatzzwecke herangezogen werden kann, bei denen eine axial von außen angebrachte Abstreiferbaugruppe unter Umständen gar nicht mehr benötigt wird. Der angeschweißte Rohransatz wäre dann nur störend und würde unnötigen Bauraum beanspruchen.

Aus der deutschen Patentschrift DE 20 01 558 ist ein weiterer Spindeltrieb mit einer Spindel und einer in Schraubeingriff mit der Spindel stehenden Mutter bekannt, bei dem im montierten Zustand der Mutter ein Dichtungsring von axial außen her an dieser angebracht werden kann. Der Dichtungsring greift in eine Gewindenut in der Außenumfangsfläche der Spindel ein und wird von einem Spindelende her auf die Spindel aufgedreht. In einer axialen Stirnfläche der Mutter sind über den Umfang verteilt mehrere axial gerichtete Zapfenaufnahmelöcher vorgesehen. Ähnliche Zapfenaufnahmelöcher sind auch in dem Dichtungsring vorgesehen. Wenn der Dichtungsring bei seiner Montage in die gewünschte axiale Position relativ zur Mutter gedreht ist, werden die Zapfenaufnahmelöcher in dem Dichtungsring und der Mutter in Deckung gebracht und dann mit Zapfen besetzt, die den Dichtungsring verdrehsicher an der Mutter halten. Durch ein sich an der Mutter abstützendes Vorspannorgan wird der Dichtungsring axial von der Mutter weg gegen die Gewindegänge des Spindelgewindes vorgespannt.

Auch bei der Lösung nach der DE 20 01 558 kann nicht ohne weiteres auf eine herkömmliche, handelsübliche Mutter zurückgegriffen werden, um den Dichtungsring anbringen zu können. Vielmehr muß die Mutter erst gezielt bearbeitet werden, um die Voraussetzungen für die Montage des Dichtungsrings zu schaffen. Es müssen nämlich die Zapfenaufnahmelöcher gebohrt werden, was einen zusätzlichen Arbeitsaufwand mit sich bringt. Zudem ist die Montage des Dichtungsrings außerordentlich mühsam, da der Dichtungsring gegen die Wirkung des Vorspannorgans relativ zur Mutter festgehalten werden muß, um die einzelnen Zapfen in die in Deckung gebrachten Zapfenaufnahmelöcher einsetzen zu können.

Der Erfindung liegt demnach die Aufgabe zugrunde, einen gattungsgemäßen Spindeltrieb anzugeben, welcher einfach und schnell an der Mutter montierbar und in sicherer Weise an dieser auch in radialer Richtung fixierbar ist.

Diese Aufgabe wird erfindungsgemäß gelöst durch einen Spindeltrieb mit den Merkmalen des Anspruchs 1 und durch einen Bansatz zur Nachrüstung eines Spindeltriebs gemäß Anspruch 56. Eine Fixierung des Adapters an der Mutter in radialer Richtung wird erfindungsgemäß dadurch erreicht, daß der Adapter mindestens einen im wesentlichen in Achsrichtung der Spindel zur Mutter hin weisenden Halterungsansatz aufweist. Der Halterungsansatz dient zur Zentrierung des Adapters an der Mutter. Gewünschtenfalls kann ein solcher Halterungsansatz auch zur Fixierung des Adapters in Umfangsrichtung vorgesehen sein. Der Halterungsansatz ist als Ringrippe oder Ringrippensegment ausgebildet,
Zweckmäßigerweise ist die Mutter mit wenigstens einer Halterungsaufnahme zur Aufnahme des Halterungsansatzes ausgeführt. Diese Halterungsaufnahme ist von einer Innenumfangsfläche der Mutter radial begrenzt. Bei handelsüblichen Muttern ist häufig im Bereich ihrer axialen Enden ein ringförmiger Zwischenraum zwischen der Außenumfangsfläche der Spindel und der Innenumfangsfläche der Mutter vorhanden. In diesen radialen Zwischenraum kann der Adapter mit seinem Halterungsansatz eingeführt werden, so daß der Halterungsansatz mit der Innenumfangsfläche der Mutter in Halterungseingriff steht.

Der Adapter kann zweckmäßigerweise als Ringteil ausgebildet sein. Eine einfache und schnelle Montage des Adapters an der Mutter ist dadurch möglich, daß der Adapter in Umfangsrichtung durch eine Schlitzung aufgetrennt ist, deren Schlitzweite durch Schlitzweitenbeeinflussungsmittel beeinflußbar ist, und daß der Adapter durch Beeinflussung der Schlitzweite der Schlitzung an der Mutter festklemmbar ist. Modifikationen an der Mutter in Form einer nachträglichen Bearbeitung derselben sind bei dieser Art der Montage an sich nicht notwendig, da durch geeignete Gestaltung des Adapters dieser an im wesentlichen jeder beliebigen vorhandenen Fläche der Mutter festgeklemmt werden kann. Die Schlitzweitenbeeinflussungsmittel können als Schlitzeinengungsmittel ausgebildet sein, wobei der Adapter dann gegen eine Außenumfangsfläche der Mutter festklemmbar sein kann. Ebenso ist möglich, daß die Schlitzweitenbeeinflussungsmittel als Schlitzaufweitungsmittel ausgebildet sind und der Adapter gegen eine Innenumfangsfläche der Mutter festklemmbar ist. Eine zum Festklemmen des Adapters geeignete Außen- oder Innenumfangsfläche ist bei herkömmlichen Muttern im Regelfall vorhanden.

Der von Abstreifaufgaben freie Adapter bildet eine Schnittstelle zwischen der Mutter und der Abstreiferbaugruppe. Er ist ein von der Mutter und von der Abstreiferbaugruppe körperlich gesondert ausgebildetes Bauteil - oder eine Baueinheit. Dieses Bauteil oder diese Baueinheit kann einerseits optimal an die an der Mutter, insbesondere an einer herkömmlichen Mutter, vorhandenen Befestigungsmöglichkeit angepaßt werden. Dies bedeutet, daß der Adapter so konstruiert werden kann, daß er an der Mutter befestigbar ist, ohne die Mutter hierzu speziell bearbeiten zu müssen, beispielsweise einen geschweißten Rohransatz vorsehen zu müssen oder Bohrungen anbringen zu müssen. Die Mutter kann dann auch für solche Einsatzzwecke weiterverwendet werden, bei denen die Abstreiferbaugruppe mit dem Adapter nicht erwünscht oder nicht notwendig ist. Andererseits kann der Adapter auch optimal an die an der Abstreiferbaugruppe vorhandenen Befestigungsmöglichkeiten angepaßt werden. Es ist nämlich zu bedenken, daß bei der Konstruktion der Abstreiferbaugruppe regelmäßig zunächst ihre Abstreiffunktion im Vordergrund steht, weswegen bei der Befestigung der Abstreiferbaugruppe stets Rücksicht darauf genommen werden muß, daß die Abstreiffunktion optimal gewährleistet ist. Der Adapter löst den hier evidenten Zielkonflikt zwischen einer einfachen, dennoch betriebssicheren Befestigung der Abstreiferbaugruppe bei gleichzeitig gewährleisteter, optimaler Abstreiffunktion und der gewünschten Unversehrtheit der Mutter, so daß auf eine handelsübliche Mutter zurückgegriffen werden kann, die keiner Nachbearbeitung bedarf.

Montagetechnisch günstig ist es, wenn zumindest die Abstreiferkomponente in einem Montagezustand der Mutter, in dem diese auf der Spindel montiert ist, an der Mutter montierbar und von dieser demontierbar ist. Die Spindel muß dann nicht aus ihren Spindellagern ausgebaut werden, um die Abstreiferkomponente unter Zwischenschaltung des Adapters an der Mutter befestigen zu können. Dabei empfiehlt es sich, daß auch der Adapter in dem Montagezustand der Mutter an dieser montierbar und von dieser demontierbar ist.

Die Montage des Spindeltriebs wird weiter vereinfacht, wenn wenigstens ein die Abstreiferkomponente umfassender Teil der Abstreiferbaugruppe und der Adapter zu einer Baueinheit vormontierbar sind und als Baueinheit an der Mutter anbringbar sind. Hierbei ist es wiederum günstig, wenn die vormontierte, die Abstreiferkomponente und den Adapter umfassende Baueinheit in einem Montagezustand der Mutter, in dem diese auf der Spindel montiert ist, an dieser montierbar und von dieser demontierbar ist.

Eine mühsame axiale Ausrichtung des Adapters relativ zur Mutter wird vermieden, wenn an dem Adapter und an der Mutter zusammenwirkende erste Axialanschlagmittel vorgesehen sind, welche die Axialposition des Adapters relativ zur Mutter festlegen. Bevorzugt ist auch die Abstreiferkomponente axial fest mit dem Adapter verbindbar. ihre Montage an dem Adapter wird dann dadurch erleichtert, daß an der Abstreiferbaugruppe und an dem Adapter zusammenwirkende zweite Axialanschlagmittel vorgesehen sind, welche die Axialposition der Abstreiferkomponente relativ zum Adapter festlegen.

Es empfiehlt sich, daß zur Befestigung des Adapters an der Mutter und zur Befestigung der Abstreiferbaugruppe an dem Adapter jeweils gesonderte Befestigungsorgane vorgesehen sind. Für unterschiedliche Muttern oder/und unterschiedliche Abstreiferbaugruppen können dann die jeweils geeigneten Befestigungsorgane gewählt werden.

Wenn die Abstreiferbaugruppe eine Abstreiferkomponente umfaßt, die in eine Gewindenut der Außenoberfläche der Spindel eingreift, kann die Abstreiferbaugruppe zu ihrer Montage üblicherweise nicht axial auf die Spindel aufgeschoben werden, sondern muß vielmehr auf die Spindel aufgedreht werden. Eine einfache Montage des Spindeltriebs ohne Justieraufwand wird dann dadurch gewährleistet, daß zur Befestigung des Adapters an der Mutter Befestigungsmittel vorgesehen sind, welche eine von der Drehstellung des Adapters relativ zur Mutter unabhängige Befestigung des Adapters erlauben.

Es ist denkbar, daß unterschiedlichen Abstreiferbaugruppen jeweils ein eigener Adaptertyp zugeordnet ist. Ein wesentlicher Gedanke der Erfindung ist jedoch, einen Universaladapter bereitzustellen, der zur wahlweisen Befestigung unterschiedlicher Abstreiferbaugruppen ausgebildet ist. Die Unterschiedlichkeit der Abstreiferbaugruppen kann in einer unterschiedlichen Zahl oder/und Gestaltung ihrer Abstreiferkomponenten bestehen. Für unterschiedliche Abstreiferbaugruppen kann der Adapter dabei unterschiedliche Anbringungsstellen aufweisen. Bevorzugt ist jedoch vorgesehen, daß der Adapter zur Anbringung einer Abstreiferbaugruppe Anbringungsstellen aufweist, die für verschiedene Abstreiferbaugruppen gleich sind.

Die Abstreiferbaugruppe kann mindestens zwei körperlich gesondert ausgebildete Abstreiferkomponenten umfassen. Zumindest ein Teil der Abstreiferkomponenten kann dabei axial hintereinander in Abstreifeingriff mit der Außenumfangsfläche der Spindel stehen. Die Abstreiferkomponenten können unterschiedliche Funktionen übernehmen, so daß sich eine hochwirksame Abstreiferbaugruppe realisieren läßt, die die Mutter perfekt nach außen hin abdichtet. So ist es denkbar, daß sich zwei axial hintereinander in Abstreifeingriff mit der Außenumfangsfläche der Spindel stehende Abstreiferkomponenten hinsichtlich ihrer Abstreifwirkung unterscheiden. Zweckmäßig ist es, dann eine von einem axialen Zentralbereich der Mutter weiter entfernt in Abstreifeingriff mit der Außenumfangsfläche der Spindel stehende Abstreiferkomponente einen Vorabstreifer mit gröberer Abstreifwirkung bildet und eine näher an dem axialen Zentralbereich der Mutter in Abstreifeingriff mit der' Außenumfangsfläche der Spindel stehende Abstreiferkomponente einen Hauptabstreifer mit feinerer Abstreifwirkung bildet.

Zur Verbesserung der Abdichtung der Mutter kann vorgesehen sein, daß in dem axialen Endbereich der Mutter mindestens ein zusätzliches, von der Abstreiferbaugruppe gesondertes Abstreiferelement an der Mutter befestigt oder befestigbar ist. Zweckmäßigerweise wird dieses zusätzliche Abstreiferelement näher als die Abstreiferbaugruppe zu einem axialen Zentralbereich der Mutter hin an dieser befestigt oder befestigbar sein. Zur Aufnahme des zusätzlichen Abstreiferelements kann an der Mutter eine Abstreiferelementenaufnahmenut ausgebildet sein. Bei handelsüblichen Muttern ist eine solche Abstreiferelementenaufnahmenut häufig in Form einer Ringnut ausgebildet, in die als zusätzliches Abstreiferelement ein Dichtungsring eingesetzt werden kann. Damit steht dem Anwender des Spindeltriebs die Möglichkeit offen, in Ergänzung zur Abstreiferbaugruppe einen zusätzlichen Dichtungsring an der Mutter zu montieren oder diesen wegzulassen.

Bei einer bevorzugten Ausführungsform ist vorgesehen, daß der Adapter eine axial von der Mutter weg gerichtete Montagefläche zur Befestigung der Abstreiferbaugruppe aufweist. In der Montagefläche können dann mehrere - bezogen auf die Spindelachse - in Umfangsrichtung verteilt angeordnete, axiale Befestigungsbohrungen zur Aufnahme von Befestigungsbolzen ausgebildet sein, die der Befestigung der Abstreiferbaugruppe an der Montagefläche des Adapters dienen. Wenigstens ein Teil der Befestigungsbohrungen kann als Sacklochbohrungen ausgebildet sein. Alternativ oder zusätzlich kann wenigstens ein Teil der Befestigungsbohrungen axial durch den Adapter hindurchgehen, was es erlaubt, von axial beiden Seiten des Adapters her Befestigungsbolzen in diese Befestigungsbohrungen einzusetzen.

Bei einer bevorzugten Lösung, die sich durch eine geringe Bauteilezahl und zuverlässige und einfache Handhabung auszeichnet, umfassen die Schlitzweitenbeeinflussungsmittel eine Schlitzweitenbeeinflussungsschraube, die in eine Bohrung in dem Adapter einsetzbar ist, die in eine Schlitzbegrenzungsfläche der Schlitzung mündet. Da es unter Unterständen schwierig sein kann, in die Bohrung ein Gewinde einzuschneiden, beispielsweise weil die Wandstärke um die Bohrung herum zu gering ist, ist bevorzugt vorgesehen, daß in der Schlitzung eine körperlich gesondert ausgebildete Gewindemutter gehalten ist, mit der die Schlitzweitenbeeinflussungsschraube in Gewindeeingriff bringbar ist. Zur richtigen Positionierung der Gewindemutter empfiehlt es sich, daß diese in einer Ausnehmung in einer Schlitzbegrenzungsfläche der Schlitzung angeordnet ist.

Aus Festigkeitsgründen und zur leichten Bearbeitbarkeit wird der Adapter bevorzugt aus Metall gefertigt, wobei ein besonders leichtes Gewicht des Adapters durch die Verwendung von Aluminium gewährleistet ist. Es versteht sich jedoch, daß der Adapter auch aus Kunststoff gefertigt sein kann, beispielsweise als Spritzgußteil.

Eventuelle vorhandene Undichtigkeiten zwischen dem Adapter und der Mutter können dadurch beseitigt werden, daß eine zur Anlage an der Mutter bestimmte Anlagefläche des Adapters wenigstens zum Teil mit einem Materialüberzug versehen ist. Der Materialüberzug kann aus aufvulkanisiertem Gummi oder aufgespritztem Kunststoff bestehen und besitzt bevorzugt eine gewisse Elastizität, so daß er Undichtigkeitsstellen zwischen dem Adapter und der Mutter vollständig ausfüllen kann. Sofern der Adapter mit einer Schlitzung ausgeführt ist, empfiehlt es sich, daß auch diese Schlitzung zumindest teilweise mit insbesondere verformungsfähigen Dichtmaterial ausgefüllt ist, um das Eindringen von Verunreinigungen durch die Schlitzung zu verhindern. Wenn bei einer derartigen geschlitzten Ausführung des Adapters die Schlitzweite zum Festklemmen des Adapters verändert wird, ist es günstig, wenn das Dichtmaterial der Schlitzweitenveränderung folgen kann, also im Falle einer Schlitzeinengung elastisch kompressibel ist und sich im Falle einer Schlitzaufweitung in das zusätzlich entstandene Schlitzvolumen hinein ausdehnen kann.

Nach einer Weiterbildung der Erfindung ist vorgesehen, daß die Abstreiferbaugruppe als eine Abstreiferkomponente einen Abstreiferring umfaßt, der im wesentlichen über seinen gesamten Innenumfang in Dichteingriff mit der Außenumfangsfläche der Spindel steht. Eine gute Dichtwirkung läßt sich erreichen, wenn der Abstreiferring mit Vorspannung eingebaut ist, die ihn in radialer Richtung gegen die Außenumfangsfläche der Spindel vorspannt. Eine konstruktiv einfache Art der radialen Vorspannung des Abstreiferrings besteht darin, daß der Abstreiferring in Umfangsrichtung an einer Trennstelle aufgetrennt ist und durch trennstellenverengende Vorspannmittel vorspannbar ist. Bevorzugt ist dabei vorgesehen, daß die Trennstelle von einem im wesentlichen axial orientierten, schräg zur Radialrichtung verlaufenden Trennschlitz oder Trennschnitt gebildet ist. Durch die Neigung des Trennschlitzes oder Trennschnitts gegenüber der Radialrichtung wird erreicht, daß die in Umfangsrichtung gegenüberliegenden Begrenzungsflächen des Trennschlitzes oder Trennschnitts bei Trennstellenverengung durch die Vorspannmittel nach Art von Keilflächen aneinander entlanggleiten und die Vorspannung verstärken.

Die Vorspannmittel können einen Vorspannkörper mit einer Vorspannaufnahme umfassen, in die der Abstreiferring zu seiner Vorspannung einsetzbar ist. Dabei kann vorgesehen sein, daß der Vorspannkörper körperlich gesondert von dem Adapter ausgebildet ist und eine Vorspannhülse umfaßt, in die der Abstreiferring einsteckbar ist. Alternativ kann vorgesehen sein, daß der Vorspannkörper von dem Adapter gebildet ist und die Vorspannaufnahme an dem Adapter ausgebildet ist.

Die geschlitzte Ausführung des Abstreiferrings ermöglicht nicht nur seine radiale Vorspannung, sondern auch den Austausch des Abstreiferrings, ohne die Spindel aus ihren Spindellagern ausbauen zu müssen. Der Abstreiferring kann nämlich an seiner Trennstelle aufgebogen werden und an der so entstehenden Lücke von der Spindel abgezogen werden. Ein neuer Abstreiferring kann in gleicher Weise montiert werden, indem er aufgebogen wird und auf die Spindel aufgesteckt wird.

Als Material für den Abstreiferring empfiehlt sich Kunststoff, da dieser zum einen ausreichend verschleißfest ist und zum anderen die erforderliche Biegsamkeit bieten kann, um den Abstreiferring zu seiner Montage und Demontage in der soeben beschriebenen Weise aufbiegen zu können.

Nicht nur um Verschmutzungen von der Außenoberfläche der Spindel sorgfältig entfernen zu können, sondern auch um die Mutter nach außen hin optimal abzudichten, empfiehlt es sich, daß bei Ausbildung der Außenumfangsfläche der Spindel mit einem Gewindeprofil der Abstreiferring an seinem Innenumfang ein in das Gewindeprofil eingreifendes Negativprofil aufweist.

Montageerleichternd ist es, wenn der Abstreiferring durch Befestigungsorgane an dem Adapter fixierbar ist und dem Adapter und dem Abstreiferring Halterungsformationen zugeordnet sind, welche bereits vor Anbringung der Befestigungsorgane die Halterung des Abstreiferrings an dem Adapter gestatten. Dabei kann vorgesehen sein, daß die Halterungsformationen mindestens zwei bezogen auf die Spindelachse in Umfangsrichtung verteilt an einer der Komponenten: Abstreiferring und Adapter angeordnete oder anordenbare, in Achsrichtung zu der jeweils anderen Komponente vorstehende Halterungskörper umfassen, welche in je eine gegenüberliegende Halterungsausnehmung in der jeweils anderen Komponente axial einsetzbar sind. Besonders günstig ist es, wenn der Abstreiferring geschlitzt ist und die Halterungskörper und die zugehörigen Halterungsausnehmungen in Umfangsrichtung beidseits der Schlitzstelle des Abstreiferrings derart an den beiden Komponenten lokalisiert sind, daß der Abstreiferring unter radialer Einengung an dem Adapter halterbar ist. Durch die radiale Einengung wird der Abstreiferring unter eine Haltevorspannung gesetzt, die ihn an dem Adapter festhalten läßt, solange die Befestigungsorgane noch nicht angebracht sind.

Eine einfache Art der Befestigung der Abstreiferkomponente an dem Adapter ergibt sich dadurch, daß die Abstreiferkomponente von mindestens zwei - bezogen auf die Spindelachse - in Umfangsrichtung verteilt angeordneten Durchgangsbohrungen zur Aufnahme von Befestigungsbolzen axial durchsetzt ist, die der Befestigung der Abstreiferkomponente an dem Adapter dienen. Es ist denkbar, den Adapter zunächst an der Mutter zu befestigen und dann nach Wunsch beliebige Abstreiferkomponenten mittels solcher Befestigungsbolzen an dem Adapter anzubringen. Falls die Abstreiferbaugruppe mehrere Abstreiferkomponenten umfaßt, können die Befestigungsbolzen durch sämtliche dieser Abstreiferkomponenten hindurchgehen. Sofern die Befestigungsbolzen im Endmontagezustand des Spindeltriebs von außen zugänglich sind, können nachträglich weitere Abstreiferkomponenten zu der Abstreiferbaugruppe hinzugefügt werden oder einzelne Abstreiferkomponenten der Abstreiferbaugruppe entfernt oder durch andere Abstreiferkomponenten ersetzt werden, ohne den Adapter von der Mutter abzunehmen.

Insbesondere den Abstreiferring wird man aus Dichtigkeits- und Kostengründen häufig aus Kunststoff fertigen, der bei zu starkem Anziehen der Befestigungsbolzen jedoch der Gefahr der Quetschung unterliegt. Für den Fall, daß die Abstreiferkomponente aus einem quetschgefährdeten Material, insbesondere Kunststoff, gefertigt ist, ist es dann vorteilhaft, wenn in die Durchgangsbohrungen der Abstreiferkomponente je eine Distanzhülse vorzugsweise aus Metall eingesetzt ist, welche sich einenends an dem Adapter abstützt und andernends zur Aufnahme der von dem jeweiligen Befestigungsbolzen erzeugten Klemmkräfte ausgebildet ist.

Neben einem Dichtungsring kann die Abstreiferbaugruppe als eine Abstreiferkomponente auch eine die Spindel im wesentlichen umschließende Abstreiferbürste umfassen, die mit einer Vielzahl von Bürstenhaaren die Außenoberfläche der Spindel abbürstet. Des weiteren kann die Abstreiferbaugruppe als eine Abstreiferkomponente einen Nutkratzer umfassen, der mit mindestens einem Kratzvorsprung in eine Gewindenut in der Außenumfangsfläche der Spindel eingreift. Sowohl die Abstreiferbürste als auch der Nutkratzer werden vorrangig dazu dienen, grobe Verunreinigungen von der Außenoberfläche der Spindel abzustreifen. Zweckmäßigerweise werden sie durch einen Hauptabstreifer ergänzt werden, der auch feine Verunreinigungen von der Außenoberfläche der Spindel entfernt. Ein solcher Hauptabstreifer kann Teil der Abstreiferbaugruppe sein oder als von der Abstreiferbaugruppe gesondertes Dichtelement unmittelbar an der Mutter angebracht sein.

Die Abstreiferbaugruppe kann darüber hinaus mindestens ein Abdeckelement für die mindestens eine Abstreiferkomponente umfassen, wobei das Abdeckelement als Abdeckscheibe oder Abdeckplatte, insbesondere aus Blech, ausgebildet sein kann. Das Abdeckelement dient zum Schutz der Abstreiferkomponente(n) vor heißen Spänen, die in Werkzeugmaschinen bei spanender Bearbeitung von Werkstücken anfallen können. Das Abdeckelement bietet darüber hinaus Schutz davor, daß sich sonstige Verunreinigungen, wie etwa Staub, an der Abstreiferkomponente oder den Abstreiferkomponenten festsetzen, und kann auch Schutz vor agressiven Chemikalien, Kühl- oder Schmiermitteln bieten.

Die erfindungsgemäße Lösung ist bevorzugt für einen Spindeltrieb vorgesehen, bei dem die Spindel in ihrer Außenumfangsfläche mindestens eine schraubenartig um die Spindelachse verlaufende Gewindenut aufweist. Bei Ausbildung des Spindeltriebs als Wälzkörpergewindetrieb, insbesondere Kugelgewindetrieb, ist nach einer bevorzugten Ausführungsform vorgesehen, daß in einer Innenumfangsfläche der Mutter mindestens eine schraubenförmig um die Spindelachse verlaufende wälzkörperführende Mutternut mit zwei Endbereichen eingelassen ist, die zusammen mit der Außenumfangsfläche der Spindel einen zwischen den beiden Endbereichen verlaufenden, schraubenförmigen Wälzkörperschraubweg definiert, daß dieser Wälzkörperschraubweg durch einen zwischen den beiden Endbereichen verlaufenden Wälzkörperrückführweg in der Mutter zu einem geschlossenen Wälzkörperumlaufweg ergänzt ist und daß der Wälzkörperumlaufweg mit einer endlosen Reihe von einerseits in der Mutternut und andererseits an einer schraubenförmigen Laufbahn der Außenumfangsfläche der Spindel jeweils in Abwälzbereitschaft liegenden Wälzkörpern besetzt ist.

Nach einem weiteren Gesichtspunkt betrifft die Erfindung einen Bausatz gemäß Anspruch 56 zur Nachrüstung eines Spindeltriebs.

Durch einen solchen Bausatz wird es ermöglicht, einen herkömmlichen Spindeltrieb nachträglich mit einer Abstreiferbaugruppe auszurüsten, wobei der Adapter konstruktiv an die Mutter angepaßt werden kann, so daß zur Anbringung der Abstreiferbaugruppe eine Bearbeitung der Mutter nicht erforderlich ist. Es können unterschiedliche Adapter oder/und unterschiedliche Abstreiferbaugruppen bereitgestellt werden, die es erlauben, für jeden gewünschten Einsatzzweck des Spindeltriebs und für jede Größe und Gestaltung des Spindeltriebs einen geeigneten Nachrüstbausatz bereitzustellen. Der Adapter und die einzelnen Komponenten der Abstreiferbaugruppe können in der vorhergehend beschriebenen Weise ausgestaltet sein.

Die Zwischenschaltung eines Adapters ist nicht nur bei einem Bewegungssystem vorteilhaft anwendbar, bei dem die beiden Körper relativ zueinander linear beweglich sind, wie dies beispielsweise bei einer Linearführungseinrichtung mit einem auf einer Führungsschiene, insbesondere einer Profilschiene, längsbeweglich geführten Laufwagen oder einer auf einer Welle längsbeweglich geführten Kugelbüchse der Fall ist. In gleicher Weise können die beiden Körper relativ zueinander drehbeweglich, insbesondere schraubbeweglich, sein, wie dies beispielsweise bei dem vorstehend beschriebenen Spindeltrieb der Fall ist.

Die Erfindung wird im folgenden anhand der beigefügten Zeichnungen näher erläutert. Es stellen dar:
- Fig. 1: eine perspektivische Explosionsdarstellung eines ersten Ausführungsbeispiels des erfindungsgemäßen Spindeltriebs;
- Fig. 2: eine Spindel und im Längsschnitt eine auf der Spindel montierte Mutter des Spindeltriebs der Fig. 1;
- Fig. 3: eine Montagedarstellung des Spindeltriebs der Fig. 1 in einer Ansicht ähnlich Fig. 2;
- Fig. 4: eine perspektivische Ansicht eines Adapters des Spindeltriebs der Fig. 1;
- Fig. 5: eine Ansicht des Adapters der Fig. 4 in Blickrichtung des Pfeils V, wobei in einen Schlitz des Adapters eine Gewindemutter eingesetzt und der Schlitz durch eine Dichtmasse ausgefüllt ist;
- Fig. 6: einen Schnitt längs der Linie VI - VI der Fig. 5;
- Fig. 7: einen Dichtungsring und eine Vorspannklammer des Spindeltriebs der Fig. 1;
- Fig. 8: eine Abwandlung eines Dichtungsrings und eines Adapters;
- Fig. 9: eine perspektivische Explosionsdarstellung eines weiteren Ausführungsbeispiels des erfindungsgemäßen Spindeltriebs;
- Fig. 10: in einer Ansicht ähnlich Fig. 3 ein weiteres Ausführungsbeispiel des erfindungsgemäßen Spindeltriebs;
- Fig. 11: eine perspektivische Explosionsdarstellung eines weiteren Ausführungsbeispiels einer Abstreiferbaugruppe mit Adapter;
- Fig. 12: eine Stirnansicht des Adapters der Fig. 11 von dessen mutternferner Seite her;
- Fig. 13: den in Fig.12 mit XV bezeichneten Ausschnitt in vergrößerter Darstellung; und
- Fig. 14: einen Schnitt längs der Linie XVI-XVI der Fig.12.

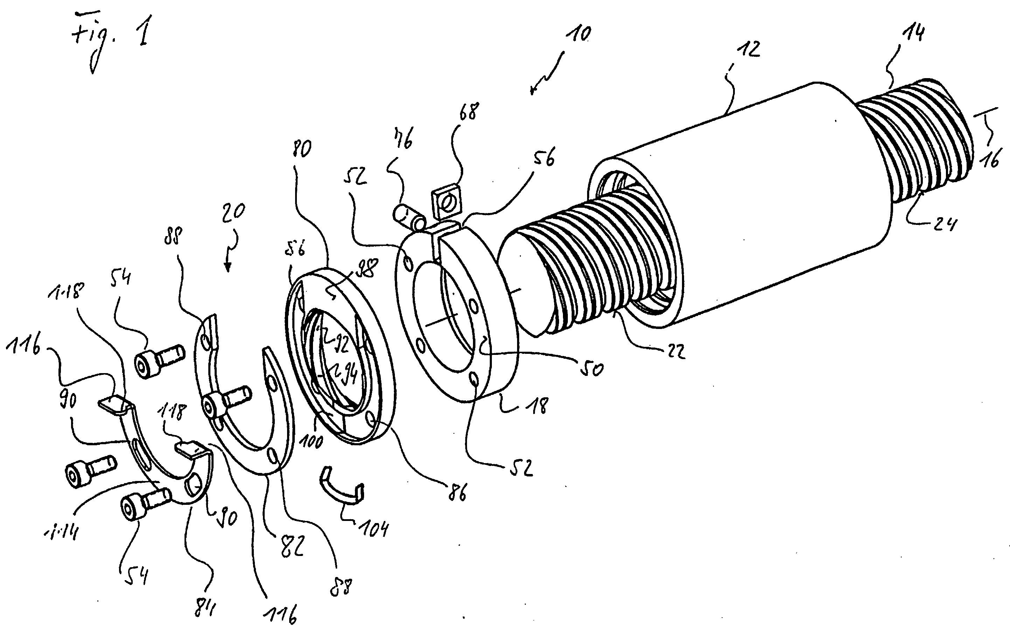

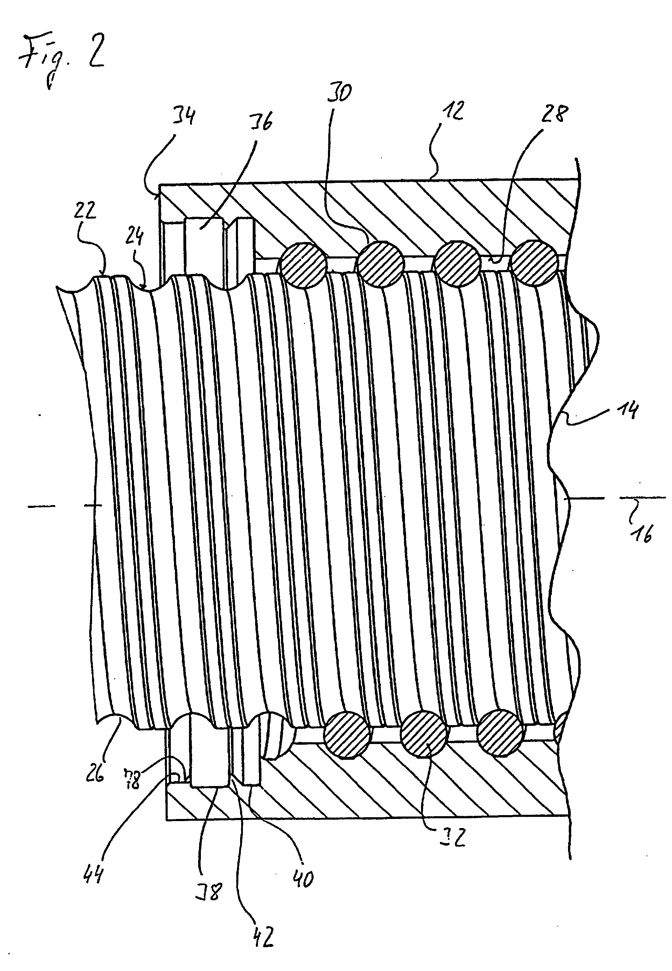

In Fig. 1 ist ein allgemein mit 10 bezeichneter Kugelschraubtrieb dargestellt, der eine Mutter 12, eine Gewindespindel 14 mit einer Spindelachse 16, einen an einem axialen Ende der Mutter 12 befestigbaren Adapter 18 sowie eine allgemein mit 20 bezeichnete Abstreiferbaugruppe umfaßt, die auf der axial von der Mutter 12 abgewandten Seite des Adapters 18 an diesem befestigbar ist. Was die Gestaltung der Gewindespindel 14 und der mit dieser in Gewindeeingriff stehenden Mutter 12 anbelangt, wird zunächst auf Fig. 2 verwiesen. Die Gewindespindel 14 weist ein in einer Außenumfangsfläche 22 der Spindel 14 eingearbeitetes Schraubgewinde 24 auf, das im gezeigten Beispielfall eingängig ausgeführt ist und von einer schraubenförmig um die Spindelachse 16 verlaufenden Außengewindenut 26 gebildet ist. Es versteht sich, daß das Schraubgewinde 24 der Gewindespindel 14 auch mehrgängig, beispielsweise zweigängig, ausgeführt sein kann. Die die Gewindespindel 14 ringförmig umschließende Mutter 12 weist in ihrer Innenumfangsfläche 28 mindestens eine ebenfalls schraubenförmig verlaufende Mutternut 30 auf, die wie die Gewindenut 26 in der Außenumfangsfläche 22 der Spindel 14 einen im wesentlichen halbkreisförmigen Querschnitt besitzt. Die Mutternut 30 und die Gewindenut 26 bilden zusammen einen Kugelschraubweg, der durch einen nicht gezeigten axialen Rückführkanal in der Mutter 12 zu einem geschlossenen Kugelumlaufweg ergänzt ist, in dem eine endlose Reihe von Kugeln 32 umläuft.

Angrenzend an eine axiale Stirnfläche 34 der Mutter 12 ist in deren Innenumfangsfläche 28 eine profilierte Ausnehmung 36 eingearbeitet. Diese profilierte Ausnehmung 36 umfaßt eine der Stirnfläche 34 nähere Ringnut 38 sowie eine stirnflächenfernere Ringnut 40. Die Ringnuten 38, 40 sind durch einen Ringsteg 42 voneinander getrennt. Die Ringnut 38 ist zur Stirnfläche 34 hin durch einen Ringsteg 44 begrenzt. Die Ringnut 40 dient zur Aufnahme eines nicht gezeigten Sicherungsrings, der in die Ringnut 40 eingeschnappt werden kann und ein ebenfalls nicht gezeigtes Umlenkstück an der Mutter 12 sichert, das die Kugeln 32 in einem axialen Endbereich der Mutter 12 zwischen dem Kugelschraubweg und dem Kugelrückführkanal umlenkt.

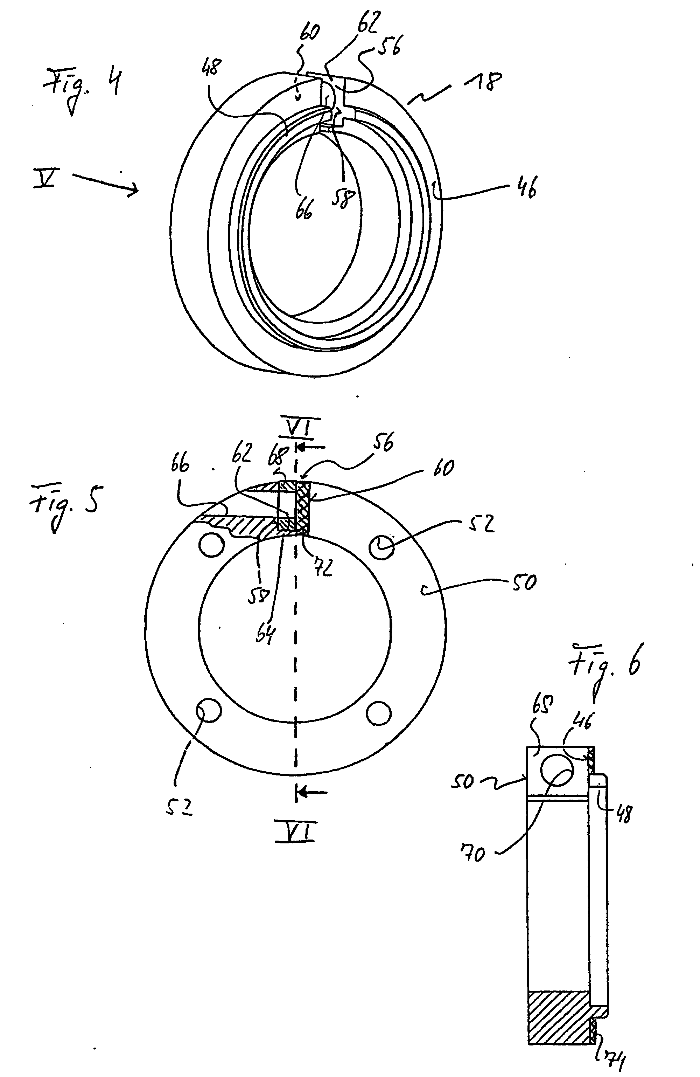

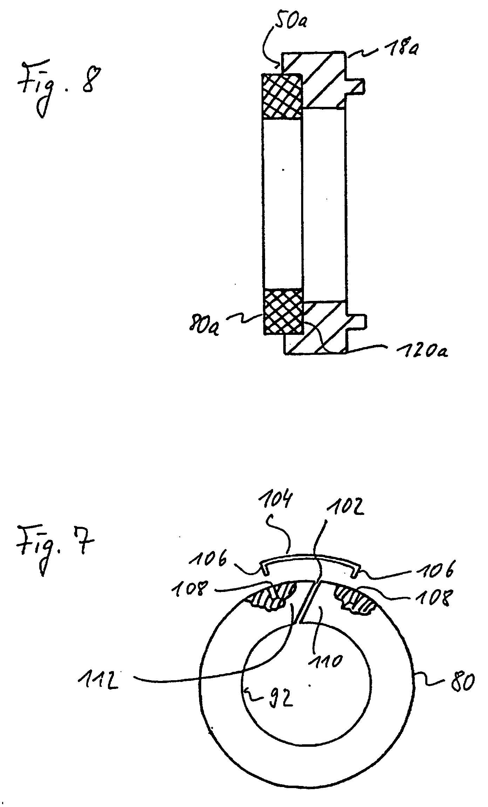

Der als Träger der Abstreiferbaugruppe 20 dienende Adapter 18 ist an der Mutter 12 festklemmbar, und zwar in einer beliebigen Drehwinkelstellung relativ zu der Mutter 12. In seinem an der Mutter 12 festgeklemmten Montagezustand ist der Adapter 18 - bezogen auf die Spindelachse 16 - sowohl in Achsrichtung als auch in Umfangsrichtung an der Mutter 12 festgelegt. Zur Erläuterung des Adapters 18 wird zunächst auf die Fig. 4 bis 6 verwiesen. Der Adapter 18 ist als Ringteil ausgebildet, dessen Innendurchmesser geringfügig größer als derAußendurchmesser der Spindel 14 ist. Sein Außendurchmesser ist annähernd gleich dem Außendurchmesser der Mutter 12 in deren an die Stirnfläche 34 anschließendem axialen Endbereich. Der Adapter 18 schließt so im montierten Zustand außen im wesentlichen bündig an die Mutter 12 an. Auf seiner der Mutter 12 axial zugewandten Seite weist der Adapter 18 eine axial gerichtete, ringförmige Planfläche 46 auf, die zur flächigen Anlage an der axialen Stirnfläche 34 der Mutter 12 bestimmt ist. Die Planfläche 46 und die Stirnfläche 34 bilden zusammenwirkende Axialanschläge, die die Axialposition des Adapters 18 relativ zur Mutter 12 festlegen. Von der Planfläche 46 steht eine ringförmige Halterungsrippe 48 im wesentlichen in axialer Richtung vor, die sich bei Montage des Adapters 18 an der Mutter 12 in die Ausnehmung 36 der Mutter 12 einfügt und den Adapter 18 an der Innenumfangsfläche 28 der Mutter 12, genauer gesagt an der Innenumfangsfläche des Ringstegs 44, zentriert.

Auf seiner axial von der Mutter 12 abgewandten Seite weist der Adapter 18 eine ringförmige, plane Montagefläche 50 auf, die zum Anbau der Abstreiferbaugruppe 20 dient. Von der axial der Mutter 12 abgewandten Seite des Adapters 18 her sind mehrere, im gezeigten Beispielfall vier, axiale Befestigungsbohrungen 52 in die Montagefläche 50 gebohrt. Die Befestigungsbohrungen 52 sind als Sackgewindelöcher ausgeführt und sind mit annähernd gleichen Winkelabständen voneinander über die Montagefläche 50 verteilt. Sie dienen zur Aufnahme von Befestigungsschrauben 54, die in Fig. 1 gezeigt sind und zur Befestigung der Abstreiferbaugruppe 20 an dem Adapter 18 dienen.

Der bevorzugt aus Aluminium, gewünschtenfalls aber auch aus Kunststoff gefertige Adapter 18 ist durch einen von seinem Innenumfang bis zu seinem Außenumfang durchgehenden, radial verlaufenden Schlitz 56 an einer Umfangsstelle aufgetrennt. Der Schlitz 56 geht in axialer Richtung durch den Adapter 18 hindurch. In Umfangsrichtung ist er durch zwei gegenüberliegende Schlitzbegrenzungsflächen 58 und 60 begrenzt. In eine der Schlitzbegrenzungsflächen, hier in die Schlitzbegrenzungsfläche 58, ist eine Aussparung 62 eingearbeitet, die sich in axialer Richtung durch den Adapter 18 hindurch erstreckt und in radialer Richtung vom Außenumfang des Adapters 18 bis zu einem in Umfangsrichtung in den Schlitz 56 vorstehenden Steg 64 reicht. Zugleich mündet in die Schlitzbegrenzungsfläche 58 eine flächennormal zur Schlitzbegrenzungsfläche 58 verlaufende Bohrung 66, die annähernd tangential zur Umfangsrichtung vom Außenumfang des Adapters 18 her in diesen eingearbeitet ist.

Zum Festklemmen des Adapters 18 an der Mutter 12 wird eine Gewindemutter 68 in die Aussparung 62 eingesetzt, so daß sie auf dem Steg 64 aufliegt und an dem ausgesparten Teil der Schlitzbegrenzungsfläche 58 anliegt. Die Gewindemutter 68 weist ein Gewindeloch 70 auf, das im eingesetzten Zustand der Gewindemutter 68 mit der Bohrung 66 fluchtet. Das nach dem Einsetzen der Mutter 68 in die Aussparung 62 verbleibende Schlitzvolumen wird sodann mit einer wenigstens begrenzt elastischen Dichtmasse 72 ausgefüllt. Die Dichtmasse 72 verhindert das Eindringen von Verunreinigungen von außerhalb des Adapters 18 in den von dem Adapter 18 umschlossenen Innenraum und hält die Mutter 68 in der Aussparung 62. Bevorzugt wird die Mutter 68 mit der Dichtmasse 72 umspritzt, so daß sie von der Dichtmasse 72 nicht nur an der Schlitzbegrenzungswand 58 gehalten wird, sondern auch in radialer Richtung und in axialer Richtung gegen Verlieren gesichert ist. Zugleich mit der Ausfüllung des Schlitzes 56 wird die Planfläche 46 zumindest radial außerhalb der Halterungsrippe 48 ebenfalls mit einer Dichtmasse 74 überzogen, die im montierten Zustand des Adapters 18 einen Dichtbelag zwischen der Planfläche 46 und der axialen Stirnfläche 34 der Mutter 12 bildet. Dieser Dichtbelag dichtet die zwischen dem Adapter 18 und der Mutter 12 gebildete Verbindungsstelle gegen das Eindringen von Schmutz und gegen das Austreten von Schmiermittel ab und gleicht Unregelmäßigkeiten in der Planfläche 46 oder/und in der axialen Stirnfläche 34 aus. Die Schlitzfüllung 72 und der Dichtbelag 74 werden zweckmäßigerweise in einem gemeinsamen Arbeitsvorgang gewünschtenfalls einstückig zusammenhängend angebracht.

Die dabei verwendete Dicht- bzw. Füllmasse kann eine Gummimasse sein, die auf den Adapter 18 aufgetragen und dort vulkanisiert wird. Denkbar ist aber auch, eine Kunststoffmasse in einem Spritzvorgang aufzutragen.

Der so vorbereitete Adapter 18 wird axial an die Stirnfläche 34 der Mutter 12 angesetzt. Die Halterungsrippe 48 greift dabei - wie bereits erläutert - in die Ausnehmung 36 am Innenumfang der Mutter 12 ein. Sodann wird in die Bohrung 66, die ohne ein Gewinde ausgeführt ist, eine Klemmschraube 76 (s. Fig. 1) eingesetzt und in die Gewindemutter 68 eingeschraubt. Die Klemmschraube 76 wird so weit in die Gewindemutter 68 eingeschraubt, daß sie sich mit ihrem zuerst eingeschraubten Ende in die Schlitzausfüllung 72 eingräbt. Bei weiterem Einschrauben der Klemmschraube 76 in die unverdrehbar in der Aussparung 62 gehaltene Gewindemutter 68 drückt die Befestigungsschraube 76 schließlich so stark gegen die Schlitzbegrenzungsfläche 60, daß sich der Adapter 18 aufweitet. Es ist möglich, daß die Befestigungsschraube 76 das Material der Schlitzausfüllung 72 durchschneidet und in unmittelbare Anlage an der Schlitzbegrenzungsfläche 60 gelangt. Genauso ist es möglich, daß sich die Befestigungsschraube 76 nur in die Schlitzausfüllung 72 eindrückt, ohne diese zu verletzen. Infolge der radialen Aufweitung des Adapters 18 wird die Halterungsrippe 48 radial gegen die mit 78 bezeichnete Kopffläche des Ringstegs 44 gedrückt, bis sich schließlich ein reibschlüssiger Festsitz zwichen der Halterungsrippe 48 und dem Ringsteg 44 einstellt, der den Adapter 18 nicht nur in Umfangsrichtung an der Mutter 12 fixiert, sondern auch ein axiales Herausziehen des Adapters 18 aus der Mutter 12 verhindert.

Mit der radialen Aufweitung des Adapters 18 geht auch eine Vergrößerung der Schlitzweite des Schlitzes 56 einher, d.h. das Schlitzvolumen nimmt zu. Die für die Schlitzausfüllung 72 verwendete Dichtmasse besitzt bevorzugt eine solche Elastizität, daß sie die Volumenzunahme des Schlitzes 56 kompensieren kann und sich in das bei Aufweitung des Adapters 18 entstehende zusätzliche Schlitzvolumen hinein ausdehnen kann. Dies ist vorteilhaft, damit nicht durch das zusätzlich entstehende Schlitzvolumen Verunreinigungen eindringen oder Schmiermittel austreten kann. Des weiteren wird hierdurch die Gewindemutter 68 stets sicher in der Aussparung 62 gehalten.

Zur Abnahme des Adapters 18 von der Mutter 12 genügt es, die Klemmschraube 76 zu lösen, wodurch sich der Adapter 18 wieder radial einengt, da er durch die vorherige radiale Aufweitung lediglich eine elastische, keine plastische Deformation erfährt. Hierdurch löst sich der Klemmsitz zwischen der Halterungsrippe 48 und dem Ringsteg 44, was es erlaubt, den Adapter 18 axial von der Mutter 12 abzuziehen. Im übrigen ist es ohne weiteres ersichtlich, daß der Adapter 18 bei montierter Mutter 12, also wenn diese auf die Spindel 14 aufgeschraubt ist, an der Mutter 12 montiert und von dieser demontiert werden kann, da der Adapter 18 einfach in axialer Richtung von außen an die Mutter 12 angesetzt werden kann. Bei geeigner Gestaltung des Adapters 18, beispielsweise wenn der Adapter 18 mittels eines Gelenks aufklappbar ist oder aus einem ausreichend elastisch verformbaren Material besteht, kann es darüber hinaus denkbar sein, den Adapter 18 nicht nur von einem Spindelende der Spindel 14 her axial auf die Spindel 14 aufzuschieben, sondern in radialer Richtung auf die Spindel 14 aufzustecken oder von dieser abzuziehen.

Es wird nun wieder auf Fig. 1 verwiesen. Die Abstreiferbaugruppe umfaßt einen in das Gewinde 24 der Spindel 14 eingreifenden Dichtungsring 80, ein den Dichtungsring 80 beispielsweise vor heißen Spänen schützendes Abdeckblech 82 sowie einen das Gewinde 24 der Spindel 14 grob vorreinigenden Nutkratzer 84. Die Bauteile Dichtungsring 80, Abdeckblech 82 und Nutkratzer 84 sind mittels der Befestigungsschrauben 54 an der Montagefläche 50 des Adapters 18 befestigbar. Der Dichtungsring 80 weist einen Satz von Durchgangslöchern 86 auf, deren Anzahl derjenigen der Sacklochbohrungen 52 des Adapters 18 entspricht und die wie die Sacklochbohrungen 52 in Umfangsrichtung verteilt angeordnet sind, so daß sie mit den Sacklochbohrungen 52 in Axialflucht bringbar sind. Die Durchgangslöchern 86 sind ohne Gewinde ausgeführt. Auch das Abdeckblech 82 weist einen Satz von Durchgangslöchern 88 auf, die mit den Durchgangslöchern 86 und den Befestigungsbohrungen 52 axial in Überdeckung bringbar sind. Schließlich weist der Nutkratzer 84 in Umfangsrichtung längliche Aufnahmelöcher 90 auf, die mit den Durchgangslöchern 88 des Abdeckblechs 82 in axiale Überdeckung bringbar sind. Da im gezeigten Beispielfall der Fig. 1 der Nutkratzer 84 eine nur halbkreisförmige Grundgestalt besitzt, weist er nur zwei Aufnahmelöcher 90 auf, während sowohl das Abdeckblech 82 als auch der Dichtungsring 80 jeweils vier Durchgangslöcher 88 bzw. 86 aufweisen. Zur Montage der Abstreiferbaugruppe werden zwei der Befestigungsschrauben 54 durch zugehörige Durchgangslöcher 88 in dem Abdeckblech 82 und durch zugehörige Durchgangslöcher 86 in dem Dichtungsring 80 gesteckt und in zugehörige Befestigungsbohrungen 52 in dem Adapter 18 eingeschraubt. Zwei weitere Befestigungsschrauben 54 werden zur Anbringung des Nutkratzers 84 zusätzlich durch dessen Aufnahmelöcher 90 hindurchgesteckt und in die restlichen beiden Befestigungsbohrungen 52 des Adapters 18 eingeschraubt.

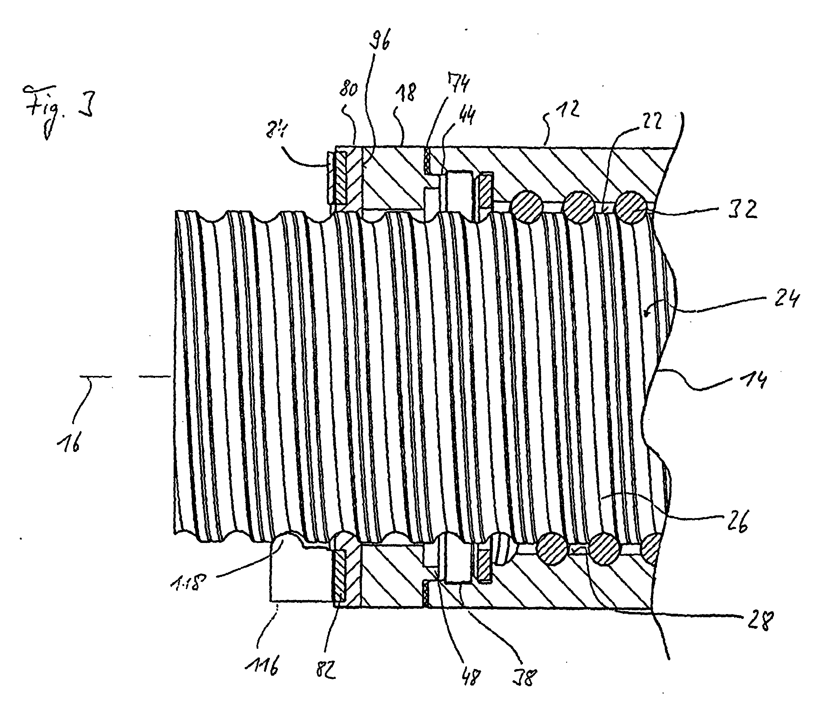

Der Dichtungsring 80 weist eine Innenumfangsfläche 92 auf, die mit einem zum Gewinde 24 der Spindel 14 komplementären Gewindeprofil 94 ausgeführt ist. Auf seiner axial dem Adapter 18 zugewandten Seite weist der Dichtungsring 80 eine zur flächigen Anlage an der Montagefläche 50 des Adapters 18 bestimmte, axial gerichtete Anlagefläche 96 auf (vgl. Fig. 3). Auf seiner axial von dem Adapter 18 abgewandten Seite weist der Dichtungsring 80 eine axial gerichtete Stirnfläche 98 auf, in die eine der Kontur des Abdeckblechs 82 angepaßte Aufnahmeaussparung 100 eingearbeitet ist. In diese Aufnahmeaussparung 100 kann das Abdeckblech 82 formschlüssig eingelegt werden, so daß es sich bündig in den von der Aussparung 100 ausgesparten Teil der Stirnfläche 98 des Dichtungsrings 80 einfügt. Das Abdeckblech 82 ist als Segmentring ausgebildet, kann aber jede beliebige andere Form besitzen, die den Dichtungsring 80 ausreichend vor Beschädigung schützt. Der Dichtungsring 80 ist zweckmäßigerweise aus Kunststoff geformt, beispielsweise spritzgegossen, wobei das Abdeckblech 82 bevorzugt ein Stahlblech ist, das jedoch gewünschtenfalls auch aus einem anderen Metall, beispielsweise Messing oder Aluminium, oder auch aus einem geeignet schlagfesten und hitzebeständigen Kunststoff bestehen kann.

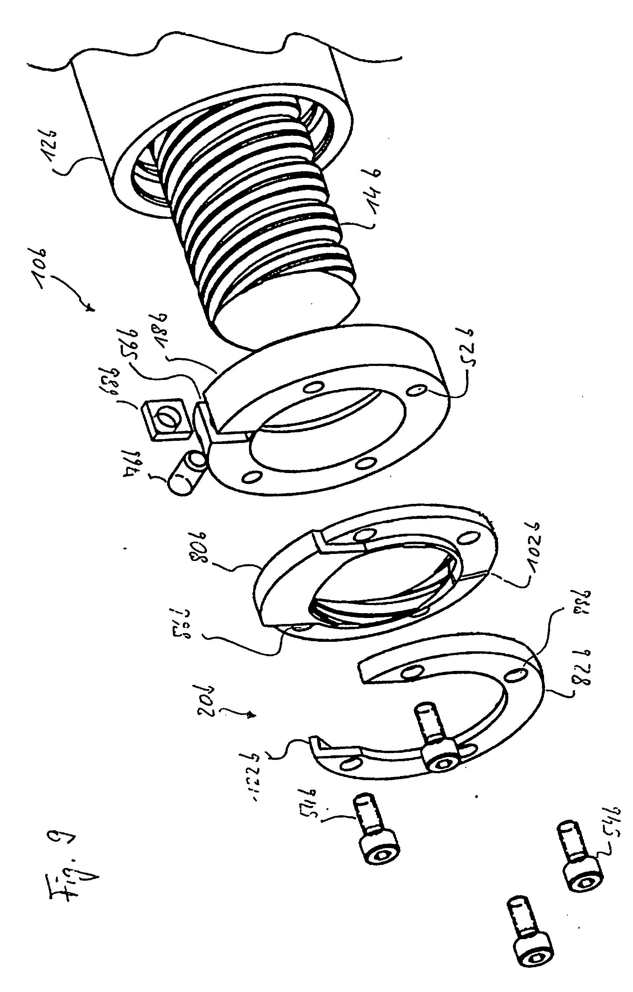

Der Dichtungsring 80 ist geschlitzt ausgeführt. Diesbezüglich wird auf Fig. 7 verwiesen, die eine etwas vereinfachte Draufsicht auf den Dichtungsring 80 zeigt. Ein schräg zur Radialrichtung verlaufender Trennschlitz 102 trennt den Dichtungsring 80 an einer Umfangsstelle auf. Der Trennschlitz 102 ist im wesentlichen in Achsrichtung orientiert. Indem der Schlitz 102 verengt wird, stellt sich eine radiale Vorspannung des Dichtungsrings 80 ein, die ihn im montierten Zustand radial gegen die Außenumfangsfläche 22 der Spindel 14 vorspannt. Es hat sich gezeigt, daß durch eine radiale Vorspannung die Dicht- bzw. Abstreifwirkung des Dichtungsrings 80 erheblich verbessert werden kann. Um den Dichtungsring 80 vorzuspannen, muß der Schlitz 102 verengt und so der Dichtungsring 80 radial eingeengt werden. Zur Verengung des Trennschlitzes 102 ist in den Fig. 1 und 7 eine Vorspannklammer 104 gezeigt, die bügelartig in Umfangsrichtung über den Trennschlitz 102 hinwegreicht und mit umgebogenen Bügelenden 106 in bezogen auf die Umfangsrichtung beidseits des Trennschlitzes 102 angeordnete Einsteckaufnahmen 108 einsteckbar ist. Der gegenseitige Abstand der Einsteckaufnahme 108 in Umfangsrichtung ist so gewählt, daß bei eingesteckter Vorspannklammer 104 der Trennschlitz 102 so weit verengt oder gar geschlossen ist, daß sich die gewünschte Vorspannung des Dichtungsrings 80 einstellt. Durch den - bezogen auf die Radialrichtung - schrägen Verlauf des Trennschlitzes 102 ergibt sich ein Vorteil insofern, als dann, wenn der Trennschlitz 102 durch die Vorspannklammer 104 oder ein anderes geeignetes Vorspannmittel vollständig geschlossen wird, die beiden in Umfangsrichtung gegenüberliegenden, den Trennschlitz 102 begrenzenden Schnittflächen als Keilflächen wirken. Der Keilwinkel der Keilflächen ist so gewählt, daß er nicht im Selbsthemmungsbereich liegt. Bei Schließen des Trennschlitzes 102 gleiten die beiden Keilflächen dann aneinander entlang, was dazu führt, daß sich ein in Fig. 7 rechter Schlitzrandbereich 110 des Dichtungsrings 80 relativ zu einem in Fig. 7 linken Schlitzrandbereich 112 des Dichtungsrings 80 nach radial innen bewegt und so die Vorspannung des Dichtungsrings 80 verstärkt.

Infolge der radialen Einengung des Dichtungsrings 80 bei dessen Vorspannung werden die Durchgangslöcher 86 in dem Dichtungsring 80 um ein geringfügiges Maß gegenüber den Befestigungsbohrungen 52 in dem Adapter 18 quer zur Achsrichtung versetzt. Aus diesem Grund empfiehlt es sich, daß die Durchgangslöcher 86 in dem Dichtungsring 80 einen etwas größeren Querschnitt als die Gewindeabschnitte der Befestigungsschrauben 54 aufweisen, so daß ein Spiel zwischen den Befestigungsschrauben 54 und den Durchgangslöchern 86 besteht. Es hat sich gezeigt, daß übliche Toleranzen, die beim Bohren von Löchern in Kunststoff- oder Metallteile nicht zu vermeiden sind, häufig bereits ausreichen, um das gewünschte geringfügige Spiel zwischen den Befestigungsschrauben 54 und den Durchgangslöchern 86 zu gewährleisten.

Der Nutkratzer 84 ist bevorzugt als gebogenes Blechteil ausgebildet. Er weist einen halbkreisförmigen Befestigungsabschnitt 114 mit den Aufnahmelöchern 90 sowie mindestens einen axial umgebogenen Kratzabschnitt 116 an einem Ende des Befestigungsabschnitts 114 auf. Für ein eingängiges Gewinde 24 der Spindel 14 genügt ein einziger Kratzabschnitt 116, der mit einem der Querschnittskontur der Gewindenut 26 der Spindel 14 angepaßten, annähernd halbmondförmigen Kratzvorsprung 118 ausgeführt ist. Im dargestellten Beispielsfall der Fig. 1 weist der Nutkratzer 84 zwei Kratzabschnitte 116 auf, die mit ihren Kratzvorsprüngen 118 zum Eingriff in ein zweigängiges Gewinde einer Spindel bestimmt sind und einander diametral gegenüberliegen. Die Ausbildung der Aufnahmelöcher 90 als Langlöcher erlaubt es, den Nutkratzer.84 relativ zu dem Adapter 18 in Umfangsrichtung zu justieren, um einen optimalen Eingriff der Kratzvorsprünge 118 in das Gewinde 24 der Spindel 14 zu erzielen.

Die Montage des in Fig. 1 gezeigten Spindeltriebs erfolgt folgendermaßen: Zunächst wird die Mutter 12 auf der Spindel 14 montiert, wie es in Fig. 1 bereits dargestellt ist. Sodann werden die einzelnen Bestandteile der Abstreiferbaugruppe 20 mittels der Befestigungsschrauben 54 an dem Adapter 18 befestigt. Die Vorspannklammer 104 muß zu diesem Zeitpunkt noch nicht an dem Dichtungsring 80 angebracht werden, was aber nicht ausgeschlossen sein soll. Die vormontierte Baueinheit aus Adapter 18, Dichtungsring 80, Deckblech 82 und Nutkratzer 84 wird anschließend an der Mutter montiert. Hierzu wird die genannte Baueinheit auf die Spindel aufgedreht, was nötig ist, da der Dichtungsring 80 mit seinem Gewindeprofil 94 in das Gewinde 24 der Spindel 14 eingreift. Die Baueinheit wird so weit an die Mutter 12 herangedreht, bis der Adapter 18 mit seiner Planfläche 46 bzw. mit dem Dichtbelag 74 an der Stirnfläche 34 der Mutter 12 zur Anlage kommt. Durch Anziehen der Klemmschraube 76 wird dann der Adapter 18 und mit ihm die Abstreiferbaugruppe 20 an der Mutter 12 fixiert. Hierauf wird die Vorspannklammer 104 zur Vorspannung des Dichtungsrings montiert und die Spindel 14 an ihren Spindelenden in zugehörige Spindellager eingebaut. Die Demontage des Spindeltriebs 10 kann in umgekehrter Reihenfolge geschehen.

Eine alternative Vorgehensweise bei der Montage des Spindeltriebs 10 besteht darin, den Adapter 18 an der auf der Spindel 14 montierten Mutter 12 zu befestigen und sodann die Spindel 14 in ihre Spindellager einzubauen, bevor die Abstreiferbaugruppe 20 an dem Adapter 18 montiert wird. Die Abstreiferbaugruppe 20 kann nämlich auch bei eingebauter Spindel 14 montiert werden. Aufgrund seines Trennschlitzes 102 kann der Dichtungsring 80 auseinandergebogen werden und radial auf die Spindel 14 aufgesteckt werden. Durch manuelle Ausrichtung läßt sich der Eingriff des Gewindeprofils 94 mit dem Gewinde 24 der Spindel 14 leicht herstellen. Auch das Abdeckblech 82 kann aufgrund seiner teilringförmigen Ausbildung ohne weiteres radial auf die Spindel 14 aufgesteckt werden, was ebenso für den halbringförmigen Nútkratzer 84 gilt. Die Bauteile der Abstreiferbaugruppe 20 werden dann mittels der Befestigungsschrauben 54 an dem Adapter 18 befestigt, der seinerseits an der Mutter 12 fixiert ist. Die Demontage des Spindeltriebs 10 kann wiederum in umgekehrter Reihenfolge geschehen. Insbesondere dann, wenn nur der Dichtungsring 80 verschlissen ist und ausgetauscht werden soll, empfiehlt sich diese letztere Vorgehensweise, da dann weder die Spindel 14 aus ihren Spindellagern ausgebaut werden muß, noch der Adapter 18 von der Mutter 12 demontiert werden muß. Fig. 3 zeigt den montierten Zustand des Spindeltriebs 10.

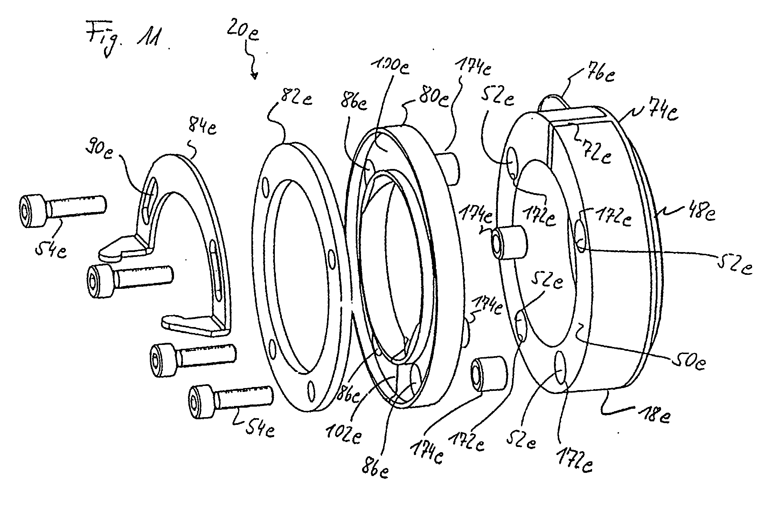

Für die Beschreibung der Fig. 8 bis 16 wird - soweit es sich um gleiche oder gleichwirkende Komponenten handelt - auf gleiche Bezugszeichen wie in den Fig. 1 bis 7 zurückgegriffen, jedoch ergänzt um einen Kleinbuchstaben. Um Wiederholungen zu vermeiden wird im folgenden im wesentlichen nur auf Unterschiede zu dem Ausführungsbeispiel der Fig. 1 bis 7 eingegangen. Im übrigen wird auf die vorangehende Beschreibung der Fig. 1 bis 7 verwiesen.

Fig. 8 zeigt eine alternative Möglichkeit der Vorspannung des Dichtungsrings 80a. Er wird nicht wie bei dem Ausführungsbeispiel der Fig. 1 bis 7 durch ein gesondertes Vorspannelement, nämlich die dortige Vorspannklammer 104, vorgespannt, sondern in eine kreisförmig in der Montagefläche 50a des Adapters 18a ausgesparte Vorspannaufnahme 120a eingesetzt, deren Durchmesser etwas kleiner als der Außendurchmesser des Dichtungsrings 80a im entspannten Zustand ist. Um den Dichtungsring 80a in die Vorspannaufnahme 120a des Adapters 18a einzusetzen, wird er per Hand zusammengedrückt und dann in die Vorspannaufnahme 120a eingeschoben. In der Vorspannaufnahme 120a ist der Dichtungsring 80a sowohl in radialer Richtung als auch in axialer Richtung fixiert.

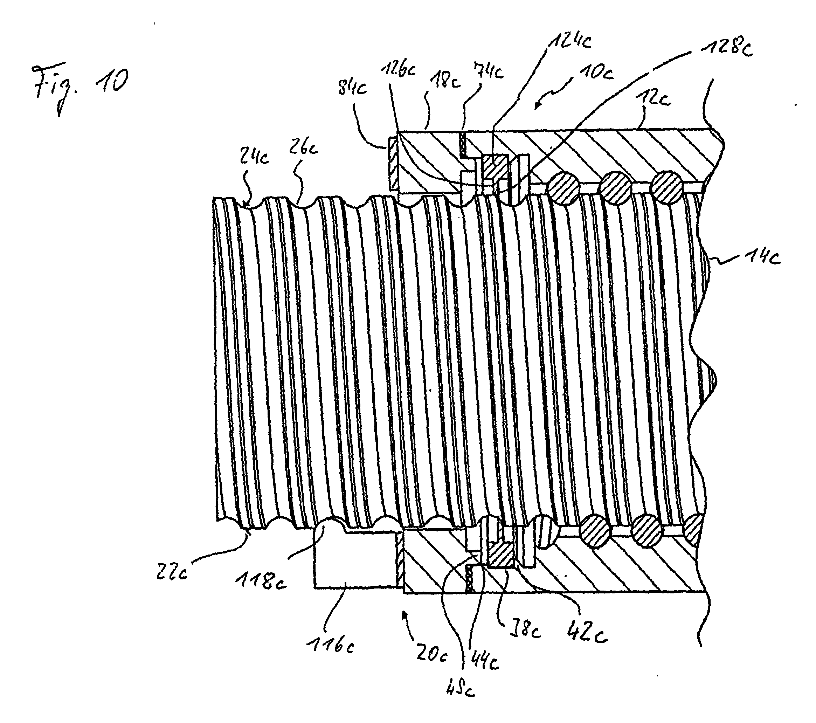

Fig. 9 zeigt ein Ausführungsbeispiel, bei dem die Abstreiferbaugruppe 20b nur den Dichtungsring 80b, jedoch keinen Nutkratzer umfaßt. Dies ist ohne weiteres möglich, sofern keine starken Verschmutzungen der Spindel 14b zu befürchten sind, die einen Vorabstreifer erforderlich machen. Die Vorspannung des Dichtungsrings 80b erfolgt bei diesem Ausführungsbeispiel dadurch, daß der Dichtungsring 80b in einen Hülsenansatz 122b eingesetzt wird, der in axialer Richtung an das Abdeckblech 82b anschließt. Der Hülsenansatz 122b kann einstückig mit dem Abdeckblech 82b ausgeführt sein, beispielsweise als gebogenes Blechteil, kann aber auch als gesondert hergestelltes Bauteil an dem Abdeckblech 82b befestigt sein, beispielsweise durch Kleben oder Schweißen. Der Innendurchmesser des Hülsenansatzes 122b ist wiederum geringfügig kleiner bemessen als der Außendurchmesser des Dichtungsrings 80b im entspannten Zustand, so daß der Trennschlitz 102b des Dichtungsrings 80b verengt und der Dichtungsring 80b radial vorgespannt werden, wenn das Abdeckblech 82b mit dem Hülsenansatz 122b auf den Dichtungsring 80b aufgesetzt werden. Ein von dem Abdeckblech 82b gesondertes Vorspannelement, wie die Vorspannklammer 104 in den Fig. 1 und 7, kann bei dem Ausführungsbeispiel der Fig. 9 entfallen. Die Montage und Demontage des in Fig. 9 dargestellten Spindeltriebs 10b erfolgen analog zu der für das Ausführungsbeispiel der Fig. 1 bis 7 beschriebenen Vorgehensweise.

Fig. 10 zeigt einen Spindeltrieb 10c, bei dem die Abstreiferbaugruppe 20c keinen Dichtungsring umfaßt, sondern lediglich den Nutkratzer 84c. Dieser wird durch zwei Befestigungsschrauben am Adapter 18c befestigt, wie aus Fig. 1 ohne weiteres ersichtlich ist. Demnach bleiben zwei Befestigungslöcher des Adapters 18c unbesetzt. Da der Nutkratzer 84c nur die Wirkung eines Vorabstreifers hat und lediglich gröbere Verunreinigungen aus dem Spindelgewinde 24c entfernt, ist zur Erzielung einer ausreichenden Abdichtung der Mutter 12c gegenüber der Spindel 14c ein von der Abstreiferbaugruppe 20c gesonderter Dichtungsring 124c in die Ringnut 38c der Mutter 12c eingesetzt. In dieser Ringnut 38c ist der Dichtungsring 124c durch die Ringstege 42c und 44c axial fixiert. Der Dichtungsring 124c besteht vorzugsweise aus einem elastomeren Werkstoff und weist eine nach radial innen abstehende ringförmige Dichtlippe 126c auf, die mit einer Lippenkante 128c an der Außenumfangsfläche 22c der Spindel 14c dichtend anliegt. Die Dichtlippe 126c ist in axialer Richtung flexibel auslenkbar, so daß sie sich optimal an die Außenumfangsfläche 22c der Spindel 14c anschmiegt. Der Dichtring 124c ist bevorzugt mit radialer Vorspannung eingebaut, um die Dichtwirkung zu erhöhen. Zu beachten ist, daß die Montage des Adapters 18c an der Mutter 12c durch den Dichtring 124c nicht behindert wird, da die Halterungsrippe 48c des Adapters 18c axial nicht über den Ringsteg 44c der Mutter 12c hinausreicht.

Es wird nun auf das Ausführungbeispiel der Fig. 11 bis 14 verwiesen. Bei dem dortigem Adapter 18e wird die Klemmschraube 76e nicht in eine in dem Schlitz 56e eingesetzte gesonderte Mutter eingeschraubt, sondern in ein in der Tangentialbohrung 66e ausgebildetes Schraubgewinde 168e. In der Schlitzbegrenzungsfläche 60e ist eine Senkaussparung 170e ausgebildet. Wenn die Klemmschraube 76e in das Schraubgewinde 168e der Tangentialbohrung 66e eingeschraubt wird, um den Adapter 18e an der Mutter festzuklemmen, stützt sich das den Schlitz 56e überbrückende, vorlaufende Ende der Klemmschraube 76e in der Senkaussparung 170e ab, was bei weiterem Eindrehen der Klemmschraube 76e zur Aufweitung des Schlitzes 56e führt.

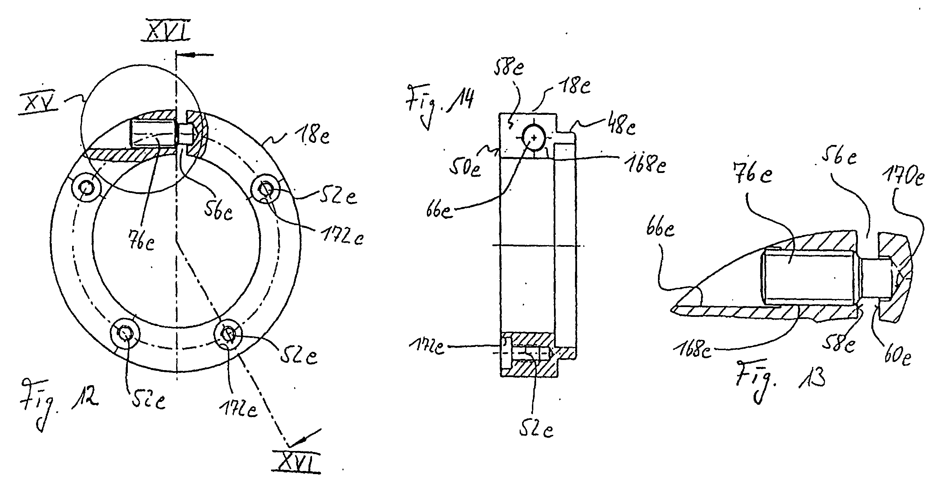

In Fig. 14 erkennt man, daß die Sacklochbohrungen 52e in dem Adapter 18e als Stufenbohrungen ausgebildet sind und jeweils eine in der Montagefläche 50e mündende stufenförmige Erweiterung 172e aufweisen. In diese stufenförmigen Erweiterungen 172e werden Distan: hülsen 174e (s. Fig. 13) eingesetzt, deren Länge größer als die Tiefe der stufenförmigen Erweiterungen 172e ist. Wenn die Distanzhülsen 174e in die Stufenerweiterungen 172e eingesetzt sind, stehen sie deshalb über die Montagefläche 50e des Adapters 18e vor. Der Durchmesser der Durchgangslöcher 86e in dem Dichtungsring 80e entspricht dem Außendurchmesser der Distanzhülsen 174e. Im entspannten Zustand des Dichtungsrings 80e ist zudem der Umfangsabstand der beiden beidseits des Trennschlitzes 102e liegenden Durchgangslöcher 86e etwas größer als der Umfangsabstand der beiden gegenüberliegenden Stufenerweiterungen 172e in dem Adapter 18e. Zur Montage der Abstreiferbaugruppe 20e an dem Adapter 18e kann so zunächst der Dichtungsring 80e auf die in den Adapter 18e eingesetzten Distanzhülsen 174e aufgesteckt werden, wobei hierzu der Dichtungsring 80e im Bereich seines Trennschlitzes 102e etwas zusammengedrückt wird. Hierdurch ergibt sich eine radiale Eigenvorspannung des Dichtungsrings 80e, die ihn ohne herunterzufallen an dem Adapter 18e hält, wenn er von der montierenden Person losgelassen wird. Dies ist insofern montageerleichternd, als die montierende Person dann beide Hände zur Verfügung hat, um den Dichtungsring 82e und den Nutkratzer 84e auf die Befestigungsbolzen 54e aufzustecken und letztere durch den Dichtungsring 80e und die Distanzhülsen 174e hindurch in den Adapter 18e einzuschrauben. Die radiale Einengung beim Aufstecken des Dichtungsrings 80e auf die Distanzhülsen 174e kann insbesondere so groß sein, daß hierdurch die gewünschte radiale Vorspannung des Dichtungsrings 80e gegenüber der Spindel erreicht wird.

Die Länge der Distanzhülsen 174e ist vorzugsweise so bemessen, daß sie etwas in die Ausnehmung 100e des Dichtungsrings 80e hineinragen, in die das Abdeckblech 82e eingesetzt wird. Das Abdeckblech 82e wird dann bei der Montage der Abstreiferbaugruppe 20e gegen die Distanzhülsen 174e gepreßt, die sich ihrerseits in den Stufenerweiterungen 172e des Adapters 18e abstützen. Beim Anziehen der Befestigungsschrauben 54e erfolgt somit keine axiale Quetschung des bevorzugt aus Kunststoff gefertigten Dichtungsrings 80e. Da der Adapter 18e, die Distanzhülsen 174e und das Abdeckblech 82e vorzugsweise aus quetschungsungefährdetem Metall bestehen, können die Befestigungsschrauben 54e dennoch derart fest angezogen werden, daß sie sich auch bei starken betriebsbedingten Vibrationen nicht lösen. Zudem muß bei der Bestimmung eines geeigneten Anzugsmoments für die Befestigungsschrauben 54e nicht die Temperaturabhängigkeit der Materialhärte des Dichtungsrings 80e berücksichtigt werden.

## Patentansprüche

1. Spindeltrieb, umfassend
- eine Spindel (14) mit einer Spindelachse (16) und einer Außenumfangsfläche (22),
- eine die Spindel (14) umschließende, mit dieser in Schraubeingriff stehende Mutter (12),
- mindestens eine in einem axialen Endbereich der Mutter (12) lösbar an dieser befestigte Abstreiferbaugruppe (20) mit mindestens einer in Abstreifeingriff mit der Außenumfangsfläche (22) der Spindel (14) stehenden Abstreiferkomponente (80, 84), und
- einen die Spindel im wesentlichen vollständig umgreifenden Adapter (18), mit welchem die Abstreiferbaugruppe (20) zu ihrer Befestigung an der Mutter (12) drehfest, jedoch lösbar verbindbar ist, welcher seinerseits axial fest und drehfest, jedoch lösbar mit der Mutter (12) verbindbar ist, und
**dadurch gekennzeichnet, daß** der Adapter (18) mindestens einen im wesentlichen in Achsrichtung der Spindel zur Mutter hin weisenden Halterungsansatz aufweist, während die Mutter mit wenigstens einer Halterungsaufnahme zur Aufnahme des als Ringrippe oder Ringrippensegment ausgebildeten Halterungsansatzes ausgeführt ist, wobei diese Halterungsaufnahme von einer Innenumfangsfläche der Mutter radial begrenzt ist, und daß der Adapter in Umfangsrichtung durch eine Schlitzung aufgetrennt ist, deren Schlitzweite durch Schlitzweitenbeeinflussungsmittel beeinflußbar ist, wobei der Adapter durch Beeinflussung der Schlitzweite der Schlitzung an der Mutter festklemmbar ist.

2. Spindeltrieb nach Anspruch 1,
**dadurch gekennzeichnet, daß** zumindest die Abstreiferkomponente in einem Montagezustand der Mutter, in dem diese auf der Spindel montiert ist, an der Mutter montierbar und von dieser demontierbar ist.

3. Spindeltrieb nach Anspruch 2,
**dadurch gekennzeichnet, daß** auch der Adapter in dem Montagezustand der Mutter an dieser montierbar und von dieser demontierbar ist.

4. Spindeltrieb nach einem der Ansprüche 1 bis 3,
**dadurch gekennzeichnet, daß** wenigstens ein die Abstreiferkomponente umfassender Teil der Abstreiferbaugruppe und der Adapter zu einer Baueinheit vormontierbar sind und als Baueinheit an der Mutter anbringbar sind.

5. Spindeltrieb nach Anspruch 4,
**dadurch gekennzeichnet, daß** die vormontierte, die Abstreiferkomponente und den Adapter umfassende Baueinheit in einem Montagezustand der Mutter, in dem diese auf der Spindel montiert ist, an dieser montierbar und von dieser demontierbar ist.

6. Spindeltrieb nach einem der Ansprüche 1 bis 5,
**dadurch gekennzeichnet, daß** an dem Adapter und an der Mutter zusammenwirkende erste Axialanschlagmittel vorgesehen sind, welche die Axialposition des Adapters relativ zur Mutter festlegen.

7. Spindeltrieb nach einem der Ansprüche 1 bis 6,
**dadurch gekennzeichnet, daß** die Abstreiferkomponente axial fest mit dem Adapter verbindbar ist.

8. Spindeltrieb nach Anspruch 7,
**dadurch gekennzeichnet, daß** an der Abstreiferbaugruppe und an dem Adapter zusammenwirkende zweite Axialanschlagmittel vorgesehen sind, welche die Axialposition der Abstreiferkomponente relativ zum Adapter festlegen.

9. Spindeltrieb nach einem der Ansprüche 1 bis 8,
**dadurch gekennzeichnet, daß** zur Befestigung des Adapters an der Mutter und zur Befestigung der Abstreiferbaugruppe an dem Adapter jeweils gesonderte Befestigungsorgane vorgesehen sind.

10. Spindeltrieb nach einem der Ansprüche 1 bis 9,
**dadurch gekennzeichnet, daß** zur Befestigung des Adapters an der Mutter Befestigungsmittel vorgesehen sind, welche eine von der Drehstellung des Adapters relativ zur Mutter unabhängige Befestigung des Adapters erlauben.

11. Spindeltrieb nach einem der Ansprüche 1 bis 10,
**dadurch gekennzeichnet, daß** der Adapter zur wahlweisen Befestigung unterschiedlicher Abstreiferbaugruppen ausgebildet ist, die sich hinsichtlich der Zahl oder/und der Gestaltung ihrer Abstreiferkomponenten unterscheiden.

12. Spindeltrieb nach Anspruch 11,
**dadurch gekennzeichnet, daß** der Adapter zur Anbringung einer Abstreiferbaugruppe Anbringungsstellen aufweist, die für verschiedene Abstreiferbaugruppen gleich sind.

13. Spindeltrieb nach einem der Ansprüche 1 bis 12,
**dadurch gekennzeichnet, daß** die Abstreiferbaugruppe mindestens zwei körperlich gesondert ausgebildete Abstreiferkomponenten umfaßt.

14. Spindeltrieb nach Anspruch 13,
**dadurch gekennzeichnet, daß** zumindest ein Teil der Abstreiferkomponenten axial hintereinander in Abstreifeingriff mit der Außenumfangsfläche der Spindel steht.

15. Spindeltrieb nach Anspruch 14,
**dadurch gekennzeichnet, daß** sich zwei axial hintereinander in Abstreifeingriff mit der Außenumfangsfläche der Spindel stehende Abstreiferkomponenten hinsichtlich ihrer Abstreifwirkung unterscheiden.

16. Spindeltrieb nach Anspruch 15,
**dadurch gekennzeichnet, daß** eine von einem axialen Zentralbereich der Mutter weiter entfernt in Abstreifeingriff mit der Außenumfangsfläche der Spindel stehende Abstreiferkomponente einen Vorabstreifer mit gröberer Abstreifwirkung bildet und eine näher an dem axialen Zentralbereich der Mutter in Abstreifeingriff mit der Außenumfangsfläche der Spindel stehende Abstreiferkomponente einen Hauptabstreifer mit feinerer Abstreifwirkung bildet.

17. Spindeltrieb nach einem der Ansprüche 1 bis 16,
**dadurch gekennzeichnet, daß** in dem axialen Endbereich der Mutter mindestens ein zusätzliches, von der Abstreiferbaugruppe gesondertes Abstreiferelement an der Mutter befestigt oder befestigbar ist.

18. Spindeltrieb nach Anspruch 17,
**dadurch gekennzeichnet, daß** das zusätzliche Abstreiferelement näher als die Abstreiferbaugruppe zu einem axialen Zentralbereich der Mutter hin an dieser befestigt oder befestigbar ist.

19. Spindeltrieb nach Anspruch 17 oder 18,
**dadurch gekennzeichnet, daß** an der Mutter eine Abstreiferelementenaufnahmenut zur Aufnahme des zusätzlichen Abstreiferelements ausgebildet ist.

20. Spindeltrieb nach Anspruch 19,
**dadurch gekennzeichnet, daß** die Abstreiferelementenaufnahmenut als Ringnut und das zusätzliche Abstreiferelement als Dichtungsring ausgebildet sind.

21. Spindeltrieb nach einem der Ansprüche 1 bis 20,
**dadurch gekennzeichnet, daß** der Adapter eine axial von der Mutter weg gerichtete Montagefläche zur Befestigung der Abstreiferbaugruppe aufweist.

22. Spindeltrieb nach Anspruch 21,
**dadurch gekennzeichnet, daß** in der Montagefläche mehrere - bezogen auf die Spindelachse - in Umfangsrichtung verteilt angeordnete, axiale Befestigungsbohrungen zur Aufnahme von Befestigungsbolzen ausgebildet sind, die der Befestigung der Abstreiferbaugruppe an der Montagefläche des Adapters dienen.

23. Spindeltrieb nach Anspruch 22,
**dadurch gekennzeichnet, daß** wenigstens ein Teil der Befestigungsbohrungen als Sacklochbohrungen ausgebildet ist.

24. Spindeltrieb nach Anspruch 22 oder 23,
**dadurch gekennzeichnet, daß** wenigstens ein Teil der Befestigungsbohrungen axial durch den Adapter hindurchgeht.

25. Spindeltrieb nach einem der Ansprüche 1 bis 24,
**dadurch gekennzeichnet, daß** der Adapter als Ringteil ausgebildet ist.

26. Spindeltrieb nach einem der Ansprüche 1 bis 25,
**dadurch gekennzeichnet, daß** die Schlitzweitenbeeinflussungsmittel als Schlitzeinengungsmittel ausgebildet sind und der Adapter gegen eine Außenumfangsfläche der Mutter festklemmbar ist.

27. Spindeltrieb nach einem der Ansprüche 1 bis 25,
**dadurch gekennzeichnet, daß** die Schlitzweitenbeeinflussungsmittel als Schlitzaufweitungsmittel ausgebildet sind und der Adapter gegen eine Innenumfangsfläche der Mutter festklemmbar ist.

28. Spindeltrieb nach Anspruch nach einem der Ansprüche 1 bis 27,
**dadurch gekennzeichnet, daß** die Schlitzweitenbeeinflussungsmittel eine Schlitzweitenbeeinflussungsschraube umfassen, die in eine Bohrung in dem Adapter einsetzbar ist, die in eine Schlitzbegrenzungsfläche der Schlitzung mündet.

29. Spindeltrieb nach Anspruch 28,
**dadurch gekennzeichnet, daß** in der Schlitzung eine körperlich gesondert ausgebildete Gewindemutter gehalten ist, mit der die Schlitzweitenbeeinflussungsschraube in Gewindeeingriff bringbar ist.

30. Spindeltrieb nach Anspruch 29,
**dadurch gekennzeichnet, daß** die Gewindemutter in einer Ausnehmung in einer Schlitzbegrenzungsfläche der Schlitzung angeordnet ist.

31. Spindeltrieb nach einem der Ansprüche 1 bis 30,
**dadurch gekennzeichnet, daß** der Adapter aus Metall, insbesondere Aluminium, gefertigt ist.

32. Spindeltrieb nach einem der Ansprüche 1 bis 31,
**dadurch gekennzeichnet, daß** eine zur Anlage an der Mutter bestimmte Anlagefläche des Adapters wenigstens zum Teil mit einem Materialüberzug versehen ist.

33. Spindeltrieb nach Anspruch 32,
**dadurch gekennzeichnet, daß** der Materialüberzug aus aufvulkanisiertem Gummi oder aufgespritztem Kunststoff besteht.

34. Spindeltrieb nach einem der Ansprüche 1 bis 30,
**dadurch gekennzeichnet, daß** die Schlitzung zumindest teilweise mit einem insbesondere verformungsfähigen Dichtmaterial ausgefüllt ist.

35. Spindeltrieb nach einem der Ansprüche 1 bis 34,
**dadurch gekennzeichnet, daß** die Abstreiferbaugruppe als eine Abstreiferkomponente einen Abstreiferring umfaßt, der im wesentlichen über seinen gesamten Innenumfang in Dichteingriff mit der Außenumfangsfläche der Spindel steht.

36. Spindeltrieb nach Anspruch 35,
**dadurch gekennzeichnet, daß** der Abstreiferring mit Vorspannung eingebaut ist, die ihn in radialer Richtung gegen die Außenumfangsfläche der Spindel vorspannt.

37. Spindeltrieb nach Anspruch 36,
**dadurch gekennzeichnet, daß** der Abstreiferring in Umfangsrichtung an einer Trennstelle aufgetrennt ist und durch trennstellenverengende Vorspannmittel vorspannbar ist.

38. Spindeltrieb nach Anspruch 37,
**dadurch gekennzeichnet, daß** die Trennstelle von einem im wesentlichen axial orientierten, schräg zur Radialrichtung verlaufenden Trennschlitz oder Trennschnitt gebildet ist.

39. Spindeltrieb nach Anspruch 37 oder 38,
**dadurch gekennzeichnet, daß** die Vorspannmittel einen Vorspannkörper mit einer Vorspannaufnahme umfassen, in die der Abstreiferring zu seiner Vorspannung einsetzbar ist.

40. Spindeltrieb nach Anspruch 39,
**dadurch gekennzeichnet, daß** der Vorspannkörper körperlich gesondert von dem Adapter ausgebildet ist und eine Vorspannhülse umfaßt, in die der Abstreiferring einsteckbar ist.

41. Spindeltrieb nach Anspruch 39,
**dadurch gekennzeichnet, daß** der Vorspannkörper von dem Adapter gebildet ist und die Vorspannaufnahme an dem Adapter ausgebildet ist.

42. Spindeltrieb nach einem der Ansprüche 35 bis 41,
**dadurch gekennzeichnet, daß** der Abstreiferring aus Kunststoff ausgebildet ist.

43. Spindeltrieb nach einem der Ansprüche 35 bis 42,
**dadurch gekennzeichnet, daß** bei Ausbildung der Außenumfangsfläche der Spindel mit einem Gewindeprofil der Abstreiferring an seinem Innenumfang ein in das Gewindeprofil eingreifendes Negativprofil aufweist.

44. Spindeltrieb nach einem der Ansprüche 35 bis 43,
**dadurch gekennzeichnet, daß** der Abstreiferring (80e) durch Befestigungsorgane (54e) an dem Adapter (18e) fixierbar ist und dem Adapter (18e) und dem Abstreiferring (80e) Halterungsformationen (172e, 174e, 86e) zugeordnet sind, welche bereits vor Anbringung der Befestigungsorgane (54e) die Halterung des Abstreiferrings (80e) an dem Adapter (18e) gestatten.

45. Spindeltrieb nach Anspruch 44,
**dadurch gekennzeichnet, daß** die Halterungsformationen (172e, 174e, 86e) mindestens zwei bezogen auf die Spindelachse in Umfangsrichtung verteilt an einer der Komponenten: Abstreiferring (80e) und Adapter (18e) angeordnete oder anordenbare, in Achsrichtung zu der jeweils anderen Komponente vorstehende Halterungskörper (174e) umfassen, welche in je eine gegenüberliegende Halterungsausnehmung (86e) in der jeweils anderen Komponente axial einsetzbar sind.

46. Spindeltrieb nach Anspruch 45,
**dadurch gekennzeichnet, daß** der Abstreiferring (80e) geschlitzt ist und daß die Halterungskörper (174e) und die zugehörigen Halterungsausnehmungen (86e) in Umfangsrichtung beidseits der Schlitzstelle des Abstreiferrings (80e) derart an den beiden Komponenten (18e, 80e) lokalisiert sind, daß der Abstreiferring (80e) unter radialer Einengung an dem Adapter (18e) halterbar ist.

47. Spindeltrieb nach einem der Ansprüche 1 bis 46,
**dadurch gekennzeichnet, daß** die Abstreiferkomponente von mindestens zwei - bezogen auf die Spindelachse - in Umfangsrichtung verteilt angeordneten Durchgangsbohrungen zur Aufnahme von Befestigungsbolzen axial durchsetzt ist, die der Befestigung der Abstreiferkomponente an dem Adapter dienen.

48. Spindeltrieb nach Anspruch 47,
**dadurch gekennzeichnet, daß** die Abstreiferkomponente (80e) aus einem quetschgefährdeten Material, insbesondere Kunststoff gefertigt ist, und in ihre Durchgangsbohrungen (86e) je eine Distanzhülse (174e) vorzugsweise aus Metall eingesetzt ist, welche sich einenends an dem Adapter (18e) abstützt und andernends zur Aufnahme der von dem jeweiligen Befestigungsbolzen (54e) erzeugten Klemmkräfte ausgebildet ist.

49. Spindeltrieb nach einem der Ansprüche 1 bis 48,
**dadurch gekennzeichnet, daß** die Abstreiferbaugruppe als eine Abstreiferkomponente eine die Spindel im wesentlichen umschließende Abstreiferbürste umfaßt.

50. Spindeltrieb nach einem der Ansprüche 1 bis 49,
**dadurch gekennzeichnet, daß** die Abstreiferbaugruppe als eine Abstreiferkomponente einen Nutkratzer umfaßt, der mit mindestens einem Kratzvorsprung in eine Gewindenut in der Außenumfangsfläche der Spindel eingreift.

51. Spindeltrieb nach einem der Ansprüche 1 bis 50,
**dadurch gekennzeichnet, daß** die Abstreiferbaugruppe mindestens ein Abdeckelement für die mindestens eine Abstreiferkomponente umfaßt.

52. Spindeltrieb nach Anspruch 51,
**dadurch gekennzeichnet, daß** das Abdeckelement als Abdeckscheibe oder -platte, insbesondere aus Blech, ausgebildet ist.

53. Spindeltrieb nach einem der Ansprüche 1 bis 52,
**dadurch gekennzeichnet, daß** die Spindel in ihrer Außenumfangsfläche mindestens eine schraubenartig um die Spindelachse verlaufende Gewindenut aufweist.

54. Spindeltrieb nach einem der Ansprüche 1 bis 53,
**dadurch gekennzeichnet, daß** er als Wälzkörpergewindetrieb, insbesondere Kugelgewindetrieb, ausgebildet ist.

55. Spindeltrieb nach Anspruch 54,
**dadurch gekennzeichnet, daß** in einer Innenumfangsfläche der Mutter mindestens eine schraubenförmig um die Spindelachse verlaufende wälzkörperführende Mutternut mit zwei Endbereichen eingelassen ist, die zusammen mit der Außenumfangsfläche der Spindel einen zwischen den beiden Endbereichen verlaufenden, schraubenförmigen Wälzkörperschraubweg definiert, daß dieser Wälzkörperschraubweg durch einen zwischen den beiden Endbereichen verlaufenden Wälzkörperrückführweg in der Mutter zu einem geschlossenen Wälzkörperumlaufweg ergänzt ist und daß der Wälzkörperumlaufweg mit einer endlosen Reihe von einerseits in der Mutternut und andererseits an einer schraubenförmigen Laufbahn der Außenumfangsfläche der Spindel jeweils in Abwälzbereitschaft liegenden Wälzkörpern besetzt ist.

56. Bausatz zur Nachrüstung eines Spindeltriebs (10), wobei der Spindeltrieb (10) eine Spindel (14) mit einer Spindelachse (16) und einer Außenumfangsfläche (22) sowie eine die Spindel (14) umschließende, mit dieser in Schraubeingriff stehende Mutter (12) umfaßt, wobei der Bausatz umfaßt:
- mindestens einen die Spindel im montierten Zustand im Wesentlichen vollständig umgreifenden und in einem axialen Endbereich der Mutter (12) axial und drehfest, jedoch lösbar von der Mutter (12) verbindbaren Adapter (18) und
- mindestens eine drehfest, jedoch lösbar mit dem Adapter (18) verbindbare Abstreiferbaugruppe (20) mit mindestens einer Abstreiferkomponente (80, 84) zum Abstreifeingriff mit der Außenumfangsfläche (22) der Spindel (14),
wobei der Adapter (18) mindestens einen im montierten Zustand im wesentlichen in Achsrichtung der Spindel zur Mutter hin weisenden Halterungsansatz aufweist, während die Mutter mit wenigstens einer Halterungsaufnahme zur Aufnahme des als Ringrippe oder Ringrippensegment ausgebildeten Halterungsansatzes ausgeführt ist, welche Halterungsaufnahme von einer Innenumfangsfläche der Mutter radial begrenzt ist, und wobei der Adapter in Umfangsrichtung durch eine Schlitzung aufgetrennt ist, deren Schlitzweite durch Schlitzweitenbeeinflussungsmittel beeinflussbar ist, so daß der Adapter durch Beeinflussung der Schlitzweite der Schlitzung an der Mutter festklemmbar ist.

57. Bausatz nach Anspruch 56, **gekennzeichnet durch** weitere Merkmale eines der Ansprüche 2 bis 55.

## Claims

1. A spindle drive, comprising
- a spindle (14) having a spindle axis (16) and an outer peripheral surface(22),
- a nut (12) that surrounds the spindle (14) and is in screw engagement therewith,
- at least one stripper assembly (20) detachably fixed in an axial end region of the nut (12) to said nut and having at least one stripper component (80, 84) in stripping engagement with the outer peripheral surface (22) of the spindle (14), and
- an adapter (18) substantially completely encompassing the spindle, with which the stripper assembly (20) can be fixed in a rotationally fixed but detachable manner for its attachment to the nut (12), and which in turn can be connected in an axially secure and rotationally fixed, but detachable manner to the nut (12), and
**characterised in that** the adapter (18) comprises at least one retaining projection pointing substantially in the axial direction of the spindle towards the nut, while the nut is designed with at least one retaining seat for accommodating the retaining projection constructed as a gill or gilled segment, this retaining seat being radially bordered by an inner peripheral face of the nut,
and **in that** the adapter is separated in the circumferential direction by a slot, the slot width of which can be influenced by slot width influencing means, it being possible to clamp the adapter to the nut by influencing the slot width of the slot.

2. A spindle drive according to Claim 1,
**characterised in that** at least the stripper component, in a mounting state of the nut in which said nut is mounted on the spindle, can be mounted on the nut and dismounted from it.

3. A spindle drive according to Claim 2,
**characterised in that** in the mounting state of the nut, the adapter can also be mounted on said nut and be dismounted from it.

4. A spindle drive according to one of Claims 1 to 3,
**characterised in that** at least a part of the stripper assembly, including the stripper component, and the adapter can be premounted to form a unit and can be mounted as a unit on the nut.

5. A spindle drive according to Claim 4,
**characterised in that** in a mounting state of the nut in which said nut is mounted on the spindle, the premounted unit including the stripper component and the adapter can be mounted on said spindle and can be dismounted from it.

6. A spindle drive according to one of Claims 1 to 5,
**characterised in that** first axial stop means interacting on the adapter and the nut are provided, which fix the axial position of the adapter relative to the nut.

7. A spindle drive according to one of Claims 1 to 6,
**characterised in that** the stripper component can be axially securely connected to the adapter.

8. A spindle drive according to Claim 7,
**characterised in that** second axial stop means interacting at the stripper assembly and at the adapter are provided, which fix the axial position of the stripper component relative to the adapter.

9. A spindle drive according to one of Claims 1 to 8,
**characterised in that** separate attachment members in each case are provided to fix the adapter to the nut and to fix the stripper assembly to the adapter.

10. A spindle drive according to one of Claims 1 to 9,
**characterised in that** to fix the adapter to the nut are provided attachment means, which allow an attachment of the adapter which is independent of the rotational position of the adapter relative to the nut.

11. A spindle drive according to one of Claims 1 to 10,
**characterised in that** the adapter is constructed for the optional attachment of different stripper assemblies, which differ with respect to the number or/and the design of their stripper components.

12. A spindle drive according to Claim 11,
**characterised in that** for mounting a stripper assembly the adapter comprises mounting sites which are identical for different stripper assemblies.

13. A spindle drive according to one of Claims 1 to 12,
**characterised in that** the stripper assembly comprises at least two physically separately constructed stripper components.

14. A spindle drive according to Claim 13,
**characterised in that** at least one part of the stripper components axially one behind the other are in stripping engagement with the outer peripheral surface of the spindle.

15. A spindle drive according to Claim 14,
**characterised in that** two stripper components which axially one behind the other are in striping engagement with the outer peripheral surface of the spindle differ with respect to their stripping action.

16. A spindle drive according to Claim 15,
**characterised in that** a stripper component situated further away from an axial central region of the nut in stripping engagement with the outer peripheral surface of the spindle forms a preliminary stripper having a coarser stripping action and a stripper component situated closer to the axial central region of the nut in stripping engagement with the outer peripheral surface of the spindle forms a main stripper with a finer stripping action.

17. A spindle drive according to one of Claims 1 to 16,
**characterised in that** at least one additional stripper element separate from the stripper assembly is fixed or can be fixed on the nut in the axial end region of the nut.

18. A spindle drive according to Claim 17,
**characterised in that** the additional stripper element is fixed or can be fixed on the nut closer than the stripper assembly to an axial central region of said nut.

19. A spindle drive according to Claim 17 or 18,
**characterised in that** on the nut is constructed a stripper element housing groove for housing the additional stripper element.

20. A spindle drive according to Claim 19,
**characterised in that** the stripper element housing groove is constructed as an annular groove and the additional stripper element is constructed as a sealing ring.

21. A spindle drive according to one of Claims 1 to 20,
**characterised in that** the adapter comprises a mounting surface directed axially away from the nut for the attachment of the stripper assembly.

22. A spindle drive according to Claim 21,
**characterised in that** in the mounting surface are constructed several axial fixing bores which are disposed - in relation to the spindle axis - distributed in the circumferential direction and which serve for the fixing of the stripper assembly to the mounting surface of the adapter.

23. A spindle drive according to Claim 22,
**characterised in that** at least one part of the fixing bores is constructed as blind hole bores.

24. A spindle drive according to Claim 22 or 23,
**characterised in that** at least one part of the fixing bores passes axially through the adapter.

25. A spindle drive according to one of Claim 1 to 24,
**characterised in that** the adapter is constructed as a ring part.

26. A spindle drive according to one of Claims 1 to 25,
**characterised in that** the slot width influencing means are constructed as slot constriction means and the adapter can be clamped against an outer peripheral surface of the nut.

27. A spindle drive according to one of Claims 1 to 25,
**characterised in that** the slot width influencing means are constructed as slot expansion means and the adapter can be clamped against an inner peripheral surface of the nut.

28. A spindle drive according to Claim according to one of Claims 1 to 27,
**characterised in that** the slot width influencing means comprise a slot width influencing screw which can be inserted into a bore in the adapter which opens into a slot boundary face of the slot.

29. A spindle drive according to Claim 28,
**characterised in that** in the slot is retained a physically separately constructed threaded nut with which the slot width influencing means can be brought into thread engagement.

30. A spindle drive according to Claim 29,
**characterised in that** the threaded nut is disposed in a recess in a slot boundary face of the slot.

31. A spindle drive according to one of Claims 1 to 30,
**characterised in that** the adapter is produced from metal, in particular aluminium.

32. A spindle drive according to one of Claims 1 to 31,
**characterised in that** a bearing face of the adapter intended to bear against the nut is provided at least partially with a material coating.

33. A spindle drive according to Claim 32,
**characterised in that** the material coating is made from vulcanised rubber or sprayed plastic.

34. A spindle drive according to one of Claims 1 to 30,
**characterised in that** the slot is filled at least to some extent with a particularly deformable sealing material.

35. A spindle drive according to one of Claims 1 to 34,
**characterised in that** the stripper assembly comprises a stripper ring as a stripper component, which is in sealing engagement with the outer peripheral surface of the spindle substantially over its entire inner periphery.

36. A spindle drive according to Claim 35,
**characterised in that** the stripper ring is installed with preload which prestresses it in the radial direction against the outer peripheral surface of the spindle.

37. A spindle drive according to Claim 36,
**characterised in that** the stripper ring is separated in the peripheral direction at a separating point and can be prestressed by prestressing means which constrict the separating point.

38. A spindle drive according to Claim 37,
**characterised in that** the separating point is formed by a substantially axially oriented separating slit or separating cut running obliquely to the radial direction.

39. A spindle drive according to Claim 37 or 38,
**characterised in that** the prestressing means comprise a prestressing member with a prestressing seat into which the stripper ring can be inserted for its prestressing.

40. A spindle drive according to Claim 39,
**characterised in that** the prestressing member is constructed physically separate from the adapter and comprises a prestressing sleeve into which the stripper ring can be inserted.

41. A spindle drive according to Claim 39,
**characterised in that** the prestressing member is formed by the adapter and the prestressing seat is constructed on the adapter.

42. A spindle drive according to one of Claims 35 to 41,
**characterised in that** the stripper ring is constructed from plastic.

43. A spindle drive according to one of Claims 35 to 42,
**characterised in that** during the construction of the outer peripheral surface of the spindle with a threaded profile the stripper ring comprises a negative profile engaging into the threaded profile on its inner periphery.

44. A spindle drive according to one of Claims 35 to 43,
**characterised in that** the stripper ring (80e) can be fixed by fastening elements (54e) to the adapter (18e) and retaining formations (172e, 174e, 86e), which permit the retention of the stripper ring (80e) on the adapter (18e) before the mounting of the fastening elements (54e), are associated with the adapter (18e) and the stripper ring (80e).

45. A spindle drive according to Claim 44,
**characterised in that** the retaining formations (172e, 174e, 86e) comprise at least two retaining elements (174e) which are disposed or can be disposed distributed in the circumferential direction with respect to the spindle axis on one of the following components: stripper ring (80e) and adapter (18e), and which protrude in the axial direction to the respective other component, and which can be axially inserted into an opposite retaining recess (86e) in the respective other component.

46. A spindle drive according to Claim 45,
**characterised in that** the stripper ring (80e) is slit and **in that** the retaining elements (174e) and the associated retaining recesses (86e) are located in the peripheral direction on either side of the slot location of the stripper ring (80e) in such a manner on the two components (18e, 80e) that the stripper ring (80e) can be retained with radial constriction on the adapter (18e).

47. A spindle drive according to one of Claims 1 to 46,
**characterised in that** the stripper component is axially penetrated by at least two through-holes disposed distributed in the circumferential direction - in relation to the spindle axis - for accommodating clamping bolts which serve to attach the stripper component to the adapter.

48. A spindle drive according to Claim 47,
**characterised in that** the stripper component (80e) is produced from a squeezable material, in particular plastic, and inserted into each of its through-holes (86e) is a distance sleeve (174e), preferably made of metal, which is supported at one end on the adapter (18e) and at the other end is constructed to absorb the clamping forces produced by the respective clamping bolt (54e).

49. A spindle drive according to one of Claims 1 to 48,
**characterised in that** the stripper subassembly comprises as a stripper component a stripper brush which substantially encloses the spindle.

50. A spindle drive according to one of Claims 1 to 49,
**characterised in that** the stripper assembly comprises as a stripper component a groove scraper which engages by at least one scraper projection into a threaded groove in the outer peripheral surface of the spindle.

51. A spindle drive according to one of Claims 1 to 50,
**characterised in that** the stripper assembly comprises at least one cover element for the at least one stripper component.

52. A stripper drive according to Claim 51,
**characterised in that** the cover element is constructed as a cover disk or plate, in particular made from sheet metal.

53. A spindle drive according to one of Claims 1 to 52,
**characterised in that** in its outer peripheral surface the spindle comprises at least one threaded groove running helically around the spindle axis.

54. A spindle drive according to one of Claims 1 to 53,
**characterised in that** it is constructed as a rolling element thread drive, in particular as a ball screw.

55. A spindle drive according to Claim 54,
**characterised in that** in an inner peripheral surface of the nut is recessed at least one nut groove, with two end regions, guiding a rolling element and running helically around the spindle axis, which together with the outer peripheral face of the spindle defines a helical rolling element screw path running between the two end regions,
**in that** this rolling element screw path is supplemented by a rolling element return path in the nut running between the two end regions to form a closed rolling element rotary path
and **in that** the rolling element rotary path is fitted with an endless series of rolling elements situated firstly in the nut groove and secondly on a helical track of the outer peripheral surface of the spindle so that they are ready for rolling.

56. A kit for retrofitting a spindle drive (10), the spindle drive (10) comprising a spindle (14) having a spindle axis (16) and an outer peripheral surface (22) and also a nut (12) surrounding the spindle (13) and in screw engagement therewith, the kit comprising:
- at least one adapter (18) which substantially completely encompasses the spindle in the mounted state and can be connected axially and in a rotationally fixed but detachable manner from the nut (12) in an axial end region of the nut (12), and
- at least one stripper assembly (20) which can be connected to the adapter (18) in a rotationally fixed but detachable manner, having at least one stripper component (80, 84) for stripping engagement with the outer peripheral surface (22) of the spindle (14),
wherein the adapter (18) comprises at least one retaining projection in the mounted state pointing substantially in the axial direction of the spindle to the nut, while the nut is designed with at least one retaining seat for housing the retaining projection constructed as a gill or gilled segment, which retaining seat is radially bordered by an inner peripheral face of the nut, and wherein the adapter is separated in the peripheral direction by a slot, the slot width of which can be influenced by slot width influencing means, so that the adapter can be clamped to the nut by influencing the slot width of the slot.

57. A kit according to Claim 56,
**characterised by** further features of one of Claims 2 to 55.

## Revendications

1. Mécanisme à broche comprenant
- une broche (14) avec un axe de broche (16) et une surface périphérique extérieure (22),
- un écrou (12) enfermant la broche (14), en prise vissée avec celle-ci,
- au moins un ensemble râcleur (20) fixé de manière séparable à l'écrou (12) dans une zone d'extrémité axiale de celui-ci, avec au moins un composant râcleur (80, 84) en prise de dévêtissement avec la surface périphérique extérieure (22) de la broche (14), et
- un adaptateur (18) entourant sensiblement entièrement la broche, auquel l'ensemble râcleur (20) peut être relié pour sa fixation à l'écrou (12), solidairement en rotation et de manière séparable, lequel adaptateur peut être relié de son côté à l'écrou (12) de manière fixe axialement et solidairement en rotation, mais séparable, et
**caractérisé en ce que** l'adaptateur (18) comporte au moins un appendice de maintien dirigé sensiblement dans la direction axiale de la broche vers l'écrou, tandis que l'écrou présente au moins un logement de maintien pour recevoir l'appendice de maintien réalisé sous la forme d'une nervure annulaire ou d'un segment de nervure annulaire, ce logement de maintien étant limité radialement par une surface périphérique intérieure de l'écrou, et **en ce que** dans la direction périphérique l'adaptateur est divisé par une fente, dont la largeur peut être influencée par des moyens d'action sur la largeur de fente, l'adaptateur pouvant être bloqué sur l'écrou par action sur la largeur de la fente.

2. Mécanisme à broche selon la revendication 1,
**caractérisé en ce qu'**au moins le composant râcleur à l'état de montage de l'écrou, dans lequel celui-ci est monté sur la broche, peut être monté sur l'écrou et démonté de celui-ci.

3. Mécanisme à broche selon la revendication 2,
**caractérisé en ce qu'**à l'état de montage de l'écrou, l'adaptateur peut aussi être monté sur celui-ci et démonté de celui-ci.

4. Mécanisme à broche selon l'une des revendications 1 à 3,
**caractérisé en ce qu'**au moins une partie de l'ensemble râcleur, comprenant le composant râcleur et l'adaptateur, peut être prémontée en une unité de construction et peut être placée sur l'écrou en tant qu'unité de construction.

5. Mécanisme à broche selon la revendication 4,
**caractérisé en ce que** dans un état de montage de l'écrou, dans lequel celui-ci est monté sur la broche, l'unité de construction prémontée comprenant le composant râcleur et l'adaptateur, peut être montée sur la broche et démontée de celle-ci.

6. Mécanisme à broche selon l'une des revendications 1 à 5,
**caractérisé en ce que** sur l'adaptateur et sur l'écrou sont prévus des premiers moyens de butée axiale coopérants qui fixent la position axiale de l'adaptateur par rapport à l'écrou.

7. Mécanisme à broche selon l'une des revendications 1 à 6,
**caractérisé en ce que** le composant râcleur peut être relié de manière fixe axialement à l'adaptateur.

8. Mécanisme à broche selon la revendication 7,
**caractérisé en ce que** sur l'ensemble râcleur et sur l'adaptateur sont prévus des deuxièmes moyens de butée axiale coopérants qui fixent la position axiale du composant de râcleur par rapport à l'adaptateur.

9. Mécanisme à broche selon l'une des revendications 1 à 8,
**caractérisé en ce que** pour la fixation de l'adaptateur à l'écrou et pour la fixation de l'ensemble râcleur à l'adaptateur, des organes de fixation séparés sont prévus.

10. Mécanisme à broche selon l'une des revendications 1 à 9,
**caractérisé en ce que** pour la fixation de l'adaptateur à l'écrou sont prévus des moyens de fixation qui permettent une fixation de l'adaptateur indépendante de la position de rotation de l'adaptateur par rapport à l'écrou.

11. Mécanisme à broche selon l'une des revendications 1 à 10,
**caractérisé en ce que** l'adaptateur est conçu pour la fixation en option de différents ensembles râcleurs qui diffèrent par le nombre et/ou la forme de leurs composants râcleurs.

12. Mécanisme à broche selon la revendication 1,
**caractérisé en ce que**, pour le montage d'un ensemble râcleur, l'adaptateur présente des points de mise en place qui sont les mêmes pour différents ensembles râcleurs.

13. Mécanisme à broche selon l'une des revendications 1 à 12,
**caractérisé en ce que** l'ensemble râcleur comprend au moins deux composants râcleurs réalisés séparément matériellement.

14. Mécanisme à broche selon la revendication 13,
**caractérisé en ce qu'**au moins une partie des composants râcleurs est en prise de dévêtissement l'un derrière l'autre avec la surface périphérique extérieure de la broche.

15. Mécanisme à broche selon la revendication 14,
**caractérisé en ce que** deux composants râcleurs en prise de dévêtissement axialement l'un derrière l'autre avec la surface périphérique extérieure de la broche, diffèrent de par leur action de dévêtissement.

16. Mécanisme à broche selon la revendication 15,
**caractérisé en ce qu'**un composant râcleur en prise de dévêtissement avec la surface périphérique extérieure de la broche, plus éloigné d'une zone centrale axiale de l'écrou, forme un pré-râcleur à action de dévêtissement plus grossière et un composant râcleur en prise de dévêtissement avec la surface périphérique extérieure de la broche, situé plus près de la zone centrale axiale de l'écrou, forme un râcleur principal à action de dévêtissement plus fine.

17. Mécanisme à broche selon l'une des revendications 1 à 16,
**caractérisé en ce que**, dans la zone d'extrémité axiale de l'écrou, au moins un élément râcleur supplémentaire, séparé de l'ensemble râcleur, est fixé ou peut être fixé à l'écrou.

18. Mécanisme à broche selon la revendication 17,
**caractérisé en ce que** l'élément râcleur supplémentaire est fixé ou peut être fixé à l'écrou plus près que l'ensemble râcleur par rapport à une zone centrale axiale de l'écrou.

19. Mécanisme à broche selon la revendication 17 ou 18,
**caractérisé en ce que** sur l'écrou est réalisée une rainure de réception d'élément râcleur destinée à recevoir l'élément râcleur supplémentaire.

20. Mécanisme à broche selon la revendication 19,
**caractérisé en ce que** la rainure de réception d'élément râcleur est réalisée sous la forme d'une rainure annulaire et l'élément râcleur supplémentaire sous la forme d'une bague d'étanchéité.

21. Mécanisme à broche selon l'une des revendications 1 à 20,
**caractérisé en ce que** l'adaptateur présente une surface de montage tournée à l'opposé axialement de l'écrou, pour la fixation de l'ensemble râcleur.

22. Mécanisme à broche selon la revendication 21,
**caractérisé en ce que** dans la surface de montage sont réalisés plusieurs perçages de fixation axiaux répartis dans la direction périphérique - par rapport à l'axe de la broche -, pour recevoir des boulons de fixation qui servent à la fixation de l'ensemble râcleur sur la surface de montage de l'adaptateur.

23. Mécanisme à broche selon la revendication 22,
**caractérisé en ce qu'**au moins une partie des perçages de fixation sont réalisés sous la forme de trous borgnes.

24. Mécanisme à broche selon la revendication 22 ou 23,
**caractérisé en ce qu'**au moins une partie des perçages de fixation traversent axialement l'adaptateur.

25. Mécanisme à broche selon l'une des revendications 1 à 24,
**caractérisé en ce que** l'adaptateur est réalisé sous la forme d'un élément annulaire.

26. Mécanisme à broche selon l'une des revendications 1 à 25,
**caractérisé en ce que** les moyens d'action sur la largeur de fente sont réalisés en tant que moyens de rétrécissement de fente et l'adaptateur peut être serré fermement contre une surface périphérique extérieure de l'écrou.

27. Mécanisme à broche selon l'une des revendications 1 à 25,
**caractérisé en ce que** les moyens d'action sur la largeur de fente sont réalisés en tant que moyens d'élargissement de fente et l'adaptateur peut être serré fermement contre une surface périphérique intérieure de l'écrou.

28. Mécanisme à broche selon l'une des revendications 1 à 27,
**caractérisé en ce que** les moyens d'action sur la largeur de fente comprennent une vis d'action sur la largeur de fente qui peut être insérée dans un perçage de l'adaptateur, lequel débouche dans une surface de délimitation de la fente.

29. Mécanisme à broche selon la revendication 28,
**caractérisé en ce que**, dans la fente est maintenu un écrou fileté réalisé séparément matériellement au moyen duquel la vis d'action sur la largeur de fente peut être amenée en prise vissée.

30. Mécanisme à broche selon la revendication 29,
**caractérisé en ce que** l'écrou fileté est disposé dans un évidement d'une surface de délimitation de la fente.

31. Mécanisme à broche selon l'une des revendications 1 à 30,
**caractérisé en ce que** l'adaptateur est en métal, en particulier en aluminium.

32. Mécanisme à broche selon l'une des revendications 1 à 31,
**caractérisé en ce qu'**une surface de contact de l'adaptateur, destinée à s'appliquer contre l'écrou, est pourvue au moins en partie d'un revêtement de matière.

33. Mécanisme à broche selon la revendication 32,
**caractérisé en ce que** le revêtement de matière est constitué de caoutchouc vulcanisé ou de matière plastique injectée.

34. Mécanisme à broche selon l'une des revendications 1 à 30,
**caractérisé en ce que** la fente est remplie au moins en partie d'une matière d'étanchéité en particulier déformable.

35. Mécanisme à broche selon l'une des revendications 1 à 34,
**caractérisé en ce que** l'ensemble râcleur comprend comme composant râcleur un anneau râcleur qui est en prise d'étanchéité, sensiblement sur tout son pourtour intérieur, avec la surface périphérique extérieure de la broche.

36. Mécanisme à broche selon la revendication 35,
**caractérisé en ce que** l'anneau râcleur est monté avec précontrainte qui le précontraint dans la direction radiale contre la surface périphérique extérieure de la broche.

37. Mécanisme à broche selon la revendication 36,
**caractérisé en ce que** l'anneau râcleur est divisé dans la direction périphérique en un point de séparation et peut être précontraint par des moyens de précontrainte rétrécissant le point de séparation.

38. Mécanisme à broche selon la revendication 37,
**caractérisé en ce que** le point de séparation est formé par une fente de séparation ou entaille de séparation orientée sensiblement axialement, s'étendant obliquement par rapport à la direction radiale.

39. Mécanisme à broche selon la revendication 37 ou 38,
**caractérisé en ce que** les moyens de précontrainte comprennent un corps de précontrainte avec un logement de précontrainte dans lequel l'anneau râcleur peut être inséré pour sa précontrainte.

40. Mécanisme à broche selon la revendication 39,
**caractérisé en ce que** le corps de précontrainte est réalisé séparément matériellement de l'adaptateur et comprend un manchon de précontrainte dans lequel l'anneau de précontrainte peut être emboîté.

41. Mécanisme à broche selon la revendication 39,
**caractérisé en ce que** le corps de précontrainte est formé par l'adaptateur et le logement de précontrainte est réalisé sur l'adaptateur.

42. Mécanisme à broche selon l'une des revendications 35 à 41,
**caractérisé en ce que** l'anneau râcleur est en matière plastique.

43. Mécanisme à broche selon l'une des revendications 35 à 42,
**caractérisé en ce que** dans le cas où la surface périphérique extérieure de la broche présente un profil fileté, l'anneau râcleur présente sur son pourtour intérieur un profil négatif s'engageant dans le profil fileté.

44. Mécanisme à broche selon l'une des revendications 35 à 43,
**caractérisé en ce que** l'anneau râcleur (80e) peut être fixé par des organes de fixation (54e) à l'adaptateur (18e) et à l'adaptateur (18e) et à l'anneau râcleur (80e) sont associées des formations de maintien (172e, 174e, 86e) qui autorisent, dès avant la mise en place des organes de fixation (54e), le maintien de l'anneau râcleur (30e) sur l'adaptateur (18e).

45. Mécanisme à broche selon la revendication 44,
**caractérisé en ce que** les formations de maintien (172e, 174e, 86e) comprennent au moins deux corps de maintien (174e) répartis ou pouvant être répartis par rapport à l'axe de la broche, dans la direction périphérique sur l'un des composants : anneau râcleur (80e) et adaptateur (18e), faisant saillie dans la direction axiale vers l'autre composant, lesquels corps de maintien peuvent être insérés axialement chacun dans un évidement de maintien (86e) opposé de l'autre composant.

46. Mécanisme à broche selon la revendication 45,
**caractérisé en ce que** l'anneau râcleur (80e) est fendu et **en ce que** les corps de maintien (174e) et les évidements de maintien (86e) correspondants sont localisés dans la direction périphérique des deux côtés des parties de la fente de l'anneau râcleur (80e) sur les deux composants (18e, 80e) de manière que l'anneau râcleur (80e) puisse être maintenu sur l'adaptateur (18e) par rétrécissement radial.

47. Mécanisme à broche selon l'une des revendications 1 à 46,
**caractérisé en ce que** le composant râcleur est traversé axialement par au moins deux perçages traversants disposés répartis dans la direction périphérique - par rapport à l'axe de la broche - destinés à recevoir des boulons de fixation qui servent à la fixation du composant râcleur sur l'adaptateur.

48. Mécanisme à broche selon la revendication 47,
**caractérisé en ce que** le composant râcleur (80e) est réalisé dans une matière présentant un risque d'écrasement, en particulier en matière plastique, et dans chacun de ses perçages traversants (86e) est insérée une douille d'écartement (174e) de préférence en métal qui prend appui à une extrémité contre l'adaptateur (18e), et à l'autre extrémité est réalisée pour absorber les forces de serrage produites par le boulon de fixation (54e) respectif.

49. Mécanisme à broche selon l'une des revendications 1 à 48,
**caractérisé en ce que** l'ensemble râcleur comprend, comme composant râcleur, une brosse de râclage entourant sensiblement la broche.

50. Mécanisme à broche selon l'une des revendications 1 à 49,
**caractérisé en ce que** l'ensemble râcleur comprend comme composant râcleur un racloir à rainure, qui s'engage par au moins une saillie de raclage dans une rainure filetée de la surface périphérique extérieure de la broche.

51. Mécanisme à broche selon l'une des revendications 1 à 50,
**caractérisé en ce que** l'ensemble râcleur comprend au moins un élément de recouvrement pour le ou les composants râcleurs.

52. Mécanisme à broche selon la revendication 51,
**caractérisé en ce que** l'élément de recouvrement est réalisé en tant que disque ou plaque de recouvrement, en particulier en tôle.

53. Mécanisme à broche selon l'une des revendications 1 à 52,
**caractérisé en ce que** la broche présente dans sa surface périphérique extérieure au moins une rainure filetée s'étendant à la manière d'une vis autour de l'axe de la broche.

54. Mécanisme à broche selon l'une des revendications 1 à 53,
**caractérisé en ce qu'**il est réalisé sous la forme d'un mécanisme à vis et corps de roulement, en particulier d'un mécanisme à vis et billes.

55. Mécanisme à broche selon la revendication 54,
**caractérisé en ce que** dans une surface périphérique intérieure de l'écrou, est pratiquée au moins une rainure d'écrou guidant les corps de roulement et s'étendant en hélice autour de l'axe de la broche, avec deux zones d'extrémité, laquelle rainure d'écrou définit avec la surface périphérique extérieure de la broche une trajectoire hélicoïdale pour les corps de roulement s'étendant entre les deux zones d'extrémité, **en ce que** cette trajectoire hélicoïdale des corps de roulement est complétée par une trajectoire de retour des corps de roulement s'étendant dans l'écrou entre les deux zones d'extrémité, en une trajectoire de circulation fermée des corps de roulement, et **en ce que** la trajectoire de circulation des corps de roulement est occupée par une série sans fin de corps de roulement d'une part dans la rainure d'écrou et d'autre part sur une trajectoire de forme hélicoïdale de la surface périphérique extérieure de la broche, lesquels corps de roulement sont tous prêts au roulement.

56. Jeu de pièces pour équiper ultérieurement un mécanisme à broche (10), le mécanisme à broche (10) comprenant une broche (14) avec un axe de broche (16) et une surface périphérique extérieure (22) ainsi qu'un écrou (12) enfermant la broche (14), en prise vissée avec celle-ci, le jeu de pièces comprenant
- au moins un adaptateur (18) entourant sensiblement entièrement la broche, à l'état monté et pouvant être relié axialement et solidairement en rotation, mais de manière à être séparé de l'écrou (12), dans une zone d'extrémité axiale de l'écrou (12), et
- au moins un ensemble râcleur (20) pouvant être relié à l'adaptateur (18), solidairement en rotation mais de manière séparable, avec au moins un composant râcleur (80, 84) pour la prise de dévêtissement avec la surface périphérique extérieure (22) de la broche (14),
l'adaptateur (18) comportant au moins un appendice de maintien dirigé à l'état monté sensiblement dans la direction axiale de la broche, vers l'écrou, tandis que l'écrou présente au moins un logement de maintien pour recevoir l'appendice de maintien réalisé sous la forme d'une nervure annulaire ou d'un segment de nervure annulaire, lequel logement de maintien est limité radialement par une surface périphérique intérieure de l'écrou, et l'adaptateur étant divisé dans la direction périphérique par une fente dont la largeur peut être influencée par des moyens d'action sur la largeur de fente, ce qui fait que l'adaptateur peut être serré fermement sur l'écrou par action sur la largeur de la fente.

57. Jeu de pièces selon la revendication 56,
**caractérisé par** d'autres caractéristiques de l'une des revendications 2 à 55.
